# EUROPEAN PATENT APPLICATION

(11) **EP 4 596 848 A1**
(43) Date of publication of application: **06.08.2025**
(21) Application number: 23888341.7
(22) Date of filing: 14.09.2023
(51) Int. Cl.: F01K 23/10, F02C 6/18, F02C 7/143

(54) **HEAT UTILIZATION SYSTEM AND HEAT UTILIZATION METHOD**

(30) Priority: 11.11.2022 JP 2022181269
(71) Applicant: Mitsubishi Heavy Industries, Ltd., Tokyo 100-8332 (JP)
(72) Inventor: UECHI, Hideyuki, Tokyo 100-8332 (JP); TSUJIUCHI, Tatsuya, Tokyo 100-8332 (JP); YOSHIKAWA, Masashi, Tokyo 100-8332 (JP); HIRATA, Takuya, Tokyo 100-8332 (JP); PHAM, Khanhson, Tokyo 100-8332 (JP); KIMURA, Shintaro, Tokyo 100-8332 (JP)
(74) Representative: Studio Torta S.p.A.
(86) International application number: PCT/JP2023/033531
(87) International publication number: WO 2024/100987

(57) **Abstract**

A heat utilization system includes: a heat recovery device configured to generate first steam and second steam with a lower pressure than the first steam from water by heat exchange between a heating fluid and the water; a discharge source which discharges the heating fluid; a first steam turbine driven by the first steam; a pressure reduction part configured to reduce pressure of exhaust steam which is steam that has driven the first steam turbine; a heat demand facility which utilizes heat of at least one of at least part of the exhaust steam or the second steam; an exhaust steam line connecting the first steam turbine and the heat demand facility; and a second steam line through which the second steam flows out of the heat recovery device. The second steam line is connected to the exhaust steam line at a position downstream of the pressure reduction part.

## Description

### TECHNICAL FIELD

The present disclosure relates to a heat utilization system and a heat utilization method.

The present application claims priority based on Japanese Patent Application No. 2022-181269 filed on November 11, 2022, the entire content of which is incorporated herein by reference.

### BACKGROUND ART

Patent Documents 1 to 3 each describe a configuration in which part of steam (exhaust steam) discharged from an intermediate-pressure steam turbine is used as a heat source for a carbon dioxide recovery device.

### Citation List

### Patent Literature

Patent Document 1: JP2012-184712A
Patent Document 2: JP2013-506091A (translation of a PCT application)
Patent Document 3: JP2014-29139A

### SUMMARY

### Problems to be Solved

However, in all of the systems of Patent Documents 1 to 3, only the exhaust steam from the steam turbine is used as a heat source for the carbon dioxide recovery device, which may not provide enough heat for the carbon dioxide recovery device.

In view of the above, an object of at least one embodiment of the present disclosure is to provide a heat utilization system and a heat utilization method whereby it is possible to supply a sufficient amount of heat to a heat demand facility.

### Solution to the Problems

In order to achieve the above object, a heat utilization system according to the present disclosure includes: a heat recovery device configured to generate first steam and second steam with a lower pressure than the first steam from water by heat exchange between a heating fluid and the water; a discharge source which discharges the heating fluid; a first steam turbine driven by the first steam; a pressure reduction part configured to reduce pressure of exhaust steam which is steam that has driven the first steam turbine; a heat demand facility which utilizes heat of at least one of at least part of the exhaust steam or the second steam; an exhaust steam line connecting the first steam turbine and the heat demand facility; and a second steam line through which the second steam flows out of the heat recovery device. The second steam line is connected to the exhaust steam line at a position downstream of the pressure reduction part.

Further, a heat utilization system according to the present disclosure includes: a heat recovery device configured to generate first steam from water by heat exchange between a heating fluid and the water; a discharge source which discharges the heating fluid; a first steam turbine driven by the first steam; a pressure reduction part configured to reduce pressure of exhaust steam which is steam that has driven the first steam turbine; and a heat demand facility which utilizes heat of at least part of the exhaust steam downstream of the pressure reduction part. The pressure reduction part is configured to adjust a pressure reduction amount of the exhaust steam, on the basis of heat demand in the heat demand facility.

Further, a heat utilization method according to the present disclosure includes: a step of discharging a heating fluid from a discharge source; a step of generating first steam from water by heat exchange between the heating fluid and the water; a step of driving a first steam turbine by the first steam; a step of reducing pressure of exhaust steam which is steam that has driven the first steam turbine; and a step of supplying the exhaust steam with reduced pressure to a heat demand facility. The step of reducing the pressure of the exhaust steam includes adjusting a pressure reduction amount of the exhaust steam, on the basis of heat demand in the heat demand facility.

### Advantageous Effects

With the heat utilization system of the present disclosure, not only the exhaust steam, which is steam that has driven the first steam turbine, but also the second steam supplied from the heat recovery device can be used as a heat source for the heat demand facility, thus providing a sufficient amount of heat to the heat demand facility.

Additionally, with the heat utilization system and the heat utilization method of the present disclosure, by increasing the pressure reduction amount of the exhaust steam, the pressure at the inlet of the pressure reduction part, i.e., at the outlet of the first steam turbine, increases, and the pressure expansion ratio of the first steam turbine decreases, so that the output of the first steam turbine deceases. This increases the temperature of the exhaust steam and thus increases the amount of heat supplied to the heat demand facility, allowing a sufficient amount of heat to be supplied to the heat demand facility.

### BRIEF DESCRIPTION OF DRAWINGS

FIG. 1 is a schematic configuration diagram of a heat utilization system according to Embodiment 1 of the present disclosure.
FIG. 2 is a schematic configuration diagram of a heat recovery device of the heat utilization system according to Embodiment 1 of the present disclosure.
FIG. 3 is a TQ diagram of condensate and exhaust gas in a low-pressure evaporator when the heat recovery device of the heat utilization system according to Embodiment 1 of the present disclosure has the configuration shown in FIG. 2.
FIG. 4 is a schematic configuration diagram of the heat utilization system according to Embodiment 1 of the present disclosure to control the opening degree or flow path area of a pressure regulating valve.
FIG. 5 is a schematic configuration diagram of the heat utilization system according to Embodiment 1 of the present disclosure to control the exhaust steam supply amount adjustment part.
FIG. 6 is an example of the pressure reduction part that can be used in the heat utilization system according to Embodiment 1 of the present disclosure.
FIG. 7 is an example of the pressure reduction part that can be used in the heat utilization system according to Embodiment 1 of the present disclosure.
FIG. 8 is an example of the pressure reduction part that can be used in the heat utilization system according to Embodiment 1 of the present disclosure.
FIG. 9 is an example of the pressure reduction part that can be used in the heat utilization system according to Embodiment 1 of the present disclosure.
FIG. 10 is an example of the pressure reduction part that can be used in the heat utilization system according to Embodiment 1 of the present disclosure.
FIG. 11 is a cross-sectional view taken along line XI-XI of FIG. 10.
FIG. 12 is a schematic configuration diagram of a heat utilization system according to Embodiment 2 of the present disclosure.
FIG. 13 is a configuration diagram of a modification of the heat utilization system according to Embodiment 2 of the present disclosure.
FIG. 14 is a schematic configuration diagram of a heat utilization system according to Embodiment 3 of the present disclosure.

### DETAILED DESCRIPTION

Hereinafter, a heat utilization system and a heat utilization method according to embodiments of the present disclosure will be described with reference to the drawings. The embodiment to be described below indicates one aspect of the present disclosure, does not intend to limit the disclosure, and can optionally be modified within a range of a technical idea of the present disclosure.

### (Embodiment 1)

### <Configuration of heat utilization system according to Embodiment 1 of present disclosure>

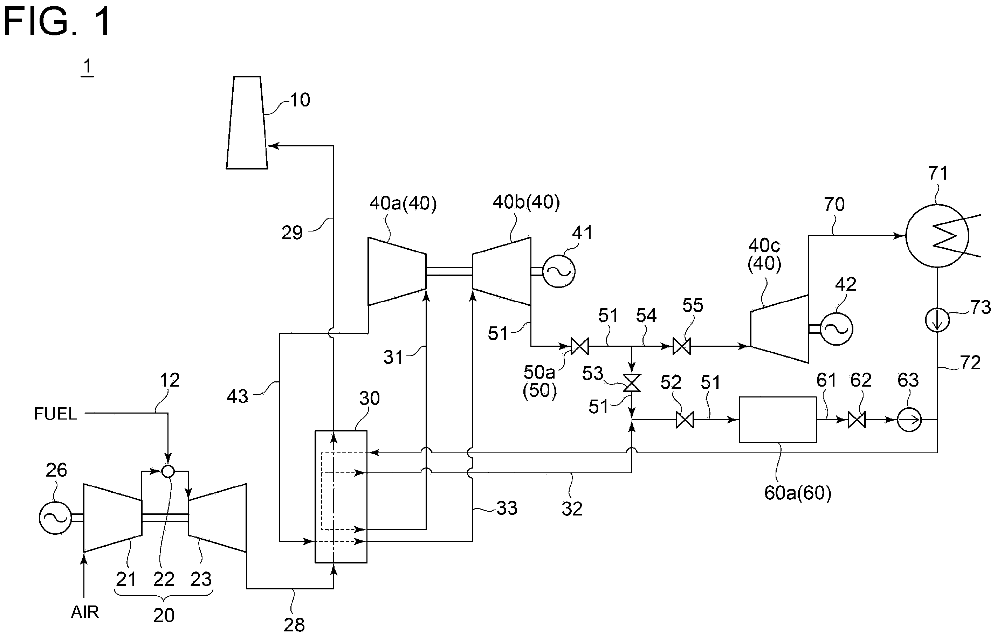

As shown in FIG. 1, a heat utilization system 1 according to Embodiment 1 of the present disclosure includes: a heat recovery device 30 configured to generate first steam and second steam with a lower pressure than the first steam from water (including not only liquid water but also steam) by heat exchange between a heating fluid and the water; a gas turbine 20 which is a discharge source for discharging the heating fluid; a steam turbine 40; a pressure regulating valve 50a which is a pressure reduction part 50 configured to reduce the pressure of exhaust steam which is steam that has driven the steam turbine 40; a heat demand facility 60 which utilizes heat of at least one of at least part of the exhaust steam or the second steam; an exhaust steam line 51 connecting the steam turbine 40 and the heat demand facility 60; and a second steam line 32 through which the second steam flows out of the heat recovery device 30. The second steam line 32 is connected to the exhaust steam line 51 at a position downstream of the pressure reduction part 50.

The exhaust steam line 51 is equipped with a heat demand facility inlet valve 52. By opening or closing the heat demand facility inlet valve 52, at least one of at least part of the exhaust steam or the second steam can be supplied to the heat demand facility 60 or stopped. The heat demand facility inlet valve 52 is not limited to an open/close valve but may be a flow control valve capable of regulating the flow rate of at least one of at least part of the exhaust steam or the second steam. The exhaust steam line 51 may be equipped with an open/close valve 53 between the pressure regulating valve 50a and the heat demand facility inlet valve 52. The open/close valve 53 stops the supply of the exhaust steam to the heat demand facility 60, so that only the second steam can be supplied to the heat demand facility 60.

The configuration of the heat demand facility 60 is not particularly limited and may include a heat exchange mechanism to heat a solid, liquid, or gaseous object by heat of at least one of at least part of the exhaust steam or the second steam, or a chemical device (e.g., steam reforming device) that uses the exhaust steam as a feedstock for chemical reactions. In Embodiment 1, the explanation will be based on an example where the heat demand facility 60 is a district heating and hot water supply facility 60a.

The configuration of the steam turbine 40 is not limited in this disclosure, but in Embodiment 1, the steam turbine 40 has a high-pressure turbine 40a, an intermediate-pressure turbine 40b, and a low-pressure turbine 40c. The high-pressure turbine 40a and the intermediate-pressure turbine 40b are connected by their rotational shafts and coupled to a power generation device 41 driven by the rotation of their rotational shafts. The low-pressure turbine 40c is independent of the high-pressure turbine 40a and the intermediate-pressure turbine 40b, and the intermediate-pressure turbine 40b and the low-pressure turbine 40c are connected through an exhaust steam branch line 54, which branches off from the exhaust steam line 51 downstream of the pressure regulating valve 50a. That is, the low-pressure turbine 40c is configured to be driven by at least part of the exhaust steam discharged from the intermediate-pressure turbine 40b. The exhaust steam branch line 54 is equipped with a low-pressure turbine inlet valve 55, which is a flow control valve. The low-pressure turbine 40c is coupled to a power generation device 42 driven by the low-pressure turbine 40c.

In the present disclosure, the steam turbine that discharges the exhaust steam supplied to the heat demand facility 60 is defined as the first steam turbine, and the steam turbine that is driven by the exhaust steam from the first steam turbine is defined as the second steam turbine. Further, the steam that drives the first steam turbine is defined as the first steam. Thus, in Embodiment 1, the intermediate-pressure turbine 40b corresponds to the first steam turbine, and the low-pressure turbine 40c corresponds to the second steam turbine. Details of the first steam that drives the intermediate-pressure turbine 40b, the first steam turbine of Embodiment 1, will be described later.

An exhaust steam line 70, through which the exhaust steam discharged from the low-pressure turbine 40c flows, is connected to a condenser 71. The condenser 71 communicates with the heat recovery device 30 through a condensate line 72 to supply condensate produced in the condenser 71 to the heat recovery device 30. The condensate line 72 is equipped with a condensate pump 73 for supplying the condensate to the heat recovery device 30. A discharge line 61 for steam used in the district heating and hot water supply facility 60a is connected to the exhaust steam line 70 at a position downstream of the condensate pump 73. The discharge line 61 is equipped with a pressure regulating valve 62 and a pump 63 disposed downstream of the pressure regulating valve 62.

The gas turbine 20 includes a compressor 21 for compressing air, a combustor 22 for burning fuel using compressed air compressed by the compressor 21, and a turbine 23 driven by combustion gas generated by burning the fuel in the combustor 22. A fuel supply line 12 for supplying the fuel is connected to the combustor 22. Further, a power generation device 26 driven by the gas turbine 20 is provided.

The turbine 23 communicates with the heat recovery device 30 through an exhaust gas line 28 to supply exhaust gas discharged from the turbine 23 to the heat recovery device 30. The heat recovery device 30 is configured to generate two steams with different pressures by heating the condensate through heat exchange between the condensate supplied to the heat recovery device 30 through the condensate line 72 and the exhaust gas supplied to the heat recovery device 30 through the exhaust gas line 28. Here, the exhaust gas is a heating fluid that exchanges heat with the condensate, and the gas turbine 20 is the discharge source of the exhaust gas which is the heating fluid. The heat recovery device 30 communicates with the high-pressure turbine 40a through a steam supply line 31 to supply the steam with higher pressure generated in the heat recovery device 30 to the high-pressure turbine 40a. The steam with lower pressure generated in the heat recovery device 30 corresponds to the above-described second steam. The upstream end of the second steam line 32 is connected to the heat recovery device 30 in order for the second steam to flow out of the heat recovery device 30.

The high-pressure turbine 40a communicates with the heat recovery device 30 through an exhaust steam line 43 to supply the exhaust steam from the high-pressure turbine 40a to the heat recovery device 30. The heat recovery device 30 is also configured to generate reheat steam by heating the exhaust steam through heat exchange between the exhaust steam supplied to the heat recovery device 30 through the exhaust steam line 43 and the exhaust gas supplied to the heat recovery device 30 through the exhaust gas line 28. The heat recovery device 30 communicates with the intermediate-pressure turbine 40b through a reheat steam supply line 33 to supply the reheat steam to the intermediate-pressure turbine 40b. In Embodiment 1, the reheat steam that drives the intermediate-pressure turbine 40b, which is the first steam turbine, corresponds to the first steam.

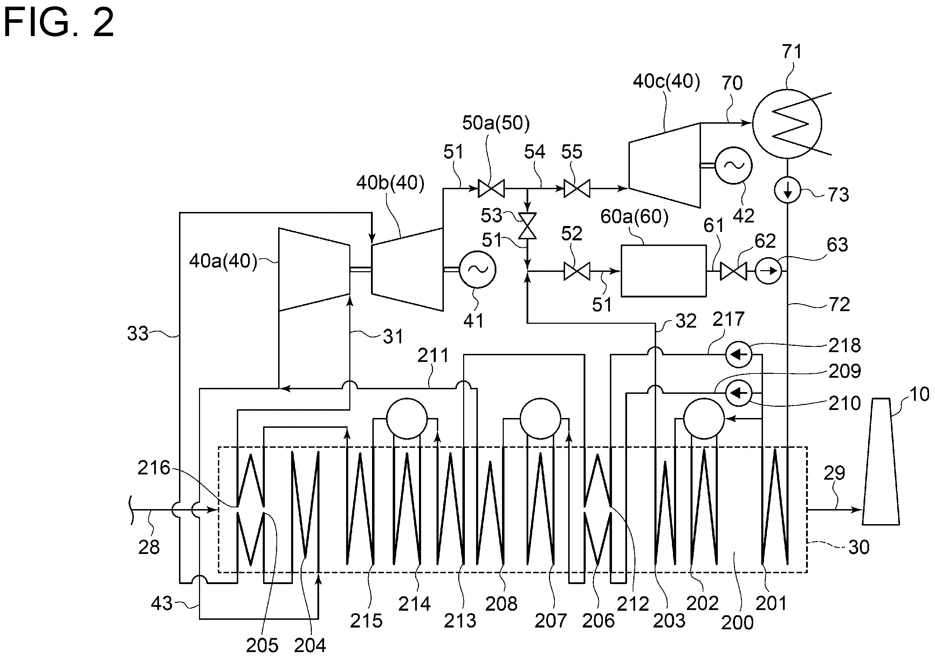

A configuration example of the heat recovery device 30 capable of generating the first and second steam by the above-described heat exchange in the heat recovery device 30 will now be described with reference to FIG. 2. The heat recovery device 30 has an exhaust gas passage 200 through which exhaust gas supplied to the heat recovery device 30 through the exhaust gas line 28 flows. In the exhaust gas passage 200, a low-pressure economizer 201, a low-pressure evaporator 202, and a low-pressure superheater 203 are provided as the configuration to generate the second steam. The condensate line 72 is connected to the low-pressure economizer 201, the low-pressure economizer 201 is connected to the low-pressure evaporator 202, the low-pressure evaporator 202 is connected to the low-pressure superheater 203, and the low-pressure superheater 203 is connected to the second steam line 32. With this configuration, the condensate supplied to the heat recovery device 30 through the condensate line 72 is heated by sequential heat exchange with the exhaust gas in the low-pressure economizer 201, the low-pressure evaporator 202, and the low-pressure superheater 203 to become the second steam, which flows out of the heat recovery device 30 and flows through the second steam line 32.

Further, in the exhaust gas passage 200, a first reheater 204 and a second reheater 205 connected to each other are provided as the configuration to generate the first steam. The exhaust steam line 43 is connected to the first reheater 204, and the reheat steam supply line 33 is connected to the second reheater 205. With this configuration, the exhaust steam supplied to the heat recovery device 30 through the exhaust steam line 43 is heated by sequential heat exchange with the exhaust gas in the first reheater 204 and the second reheater 205 to become the first steam (reheat steam), which flows out of the heat recovery device 30 and flows through the reheat steam supply line 33.

The heat recovery device 30 may be configured to generate the first steam using part of the condensate supplied to the heat recovery device 30 through the condensate line 72. In this configuration, an intermediate-pressure economizer 206, an intermediate-pressure evaporator 207, and an intermediate-pressure superheater 208 are provided in the exhaust gas passage 200. The intermediate-pressure economizer 206 is connected to the low-pressure economizer 201 through a line 209, and the line 209 is equipped with an intermediate-pressure feed pump 210. The intermediate-pressure economizer 206 is connected to the intermediate-pressure evaporator 207, and the intermediate-pressure evaporator 207 is connected to the intermediate-pressure superheater 208. A steam line 211, connected at one end to the intermediate-pressure superheater 208, is connected at the other end to the exhaust steam line 43. With this configuration, part of the condensate heated in the low-pressure economizer 201 becomes steam by heat exchange with the exhaust gas as it sequentially passes through the intermediate-pressure economizer 206, the intermediate-pressure evaporator 207, and the intermediate-pressure superheater 208 by means of the intermediate-pressure feed pump 210. The resulting steam is mixed with the exhaust steam flowing in the exhaust steam line 43 via the steam line 211 and then supplied to the heat recovery device 30 again to become the first steam.

Further, in the exhaust gas passage 200, a first high-pressure economizer 212, a second high-pressure economizer 213, a high-pressure evaporator 214, a first high-pressure superheater 215, and a second high-pressure superheater 216 are provided as the configuration to generate steam to be supplied to the high-pressure turbine 40a. The first high-pressure economizer 212 is connected to the low-pressure economizer 201 through a line 217, and the line 217 is equipped with a high-pressure feed pump 218. The first high-pressure economizer 212 is connected to the second high-pressure economizer 213, the second high-pressure economizer 213 is connected to the high-pressure evaporator 214, the high-pressure evaporator 214 is connected to the first high-pressure superheater 215, and the first high-pressure superheater 215 is connected to the second high-pressure superheater 216. The steam supply line 31 is connected to the second high-pressure superheater 216. With this configuration, part of the condensate heated in the low-pressure economizer 201 becomes steam by heat exchange with the exhaust gas as it sequentially passes through the first high-pressure economizer 212, the second high-pressure economizer 213, the high-pressure evaporator 214, the first high-pressure superheater 215, and the second high-pressure superheater 216 by means of the high-pressure feed pump 218. The resulting steam flows out of the heat recovery device 30 and flows through the steam supply line 31.

In the above, the heating fluid (exhaust gas) is supplied to the heating fluid passage (exhaust gas passage 200) of the heat recovery device 30, and in the heating fluid passage (exhaust gas passage 200), in order from upstream to downstream of the heating fluid (exhaust gas) flow, the second high-pressure superheater 216 (in parallel, second reheater 205), the first reheater 204, the first high-pressure superheater 215, the high-pressure evaporator 214, the second high-pressure economizer 213, the intermediate-pressure superheater 208, the intermediate-pressure evaporator 207, the intermediate-pressure economizer 206 (in parallel, first high-pressure economizer 212), the low-pressure superheater 203, the low-pressure evaporator 202, and the low-pressure economizer 201 are arranged. The heating fluid (exhaust gas) flowing in the heating fluid passage (exhaust gas passage 200) of the heat recovery device 30 exchanges heat with steam or water flowing in the superheater, reheater, evaporator, or economizer in the above order to heat the steam or water. A plurality of evaporators (high-pressure evaporator 214, intermediate-pressure evaporator 207, low-pressure evaporator 202) are installed in the heating fluid passage (exhaust gas passage 200) of the heat recovery device 30. The low-pressure evaporator 202 is the most downstream of the plurality of evaporators installed in the heating fluid passage (exhaust gas passage 200) of the heat recovery device 30, as viewed from the heating fluid (exhaust gas) flow. The low-pressure evaporator 202 has the lowest pressure of steam to be evaporated among the plurality of evaporators installed in the heating fluid passage (exhaust gas passage 200) of the heat recovery device 30.

Although the heat utilization system of the present embodiment is equipped with three pressure evaporators, namely the high-pressure evaporator 214, the intermediate-pressure evaporator 207, and the low-pressure evaporator 202, it can be equipped with an evaporator of even higher pressure than the high-pressure evaporator 214, for a total of four evaporators, or it can be equipped with only two evaporators, such as the high-pressure evaporator 214 and the low-pressure evaporator 202, or the intermediate-pressure evaporator 207 and the low-pressure evaporator 202, instead of three evaporators. In the heat utilization system 1 of Embodiment 1, the steam that has driven the high-pressure turbine 40a is sent to the reheater for reheating, but the outlet of the high-pressure turbine 40a may be directly connected to the inlet of the intermediate-pressure turbine 40b without a reheater. In this case, the steam line 211 may be connected to a steam flow path that directly connects the outlet of the high-pressure turbine 40a and the inlet of the intermediate-pressure turbine 40b, and the steam evaporated in the intermediate-pressure evaporator 207 may be supplied to the inlet of the intermediate-pressure turbine 40b together with the steam that has driven the high-pressure turbine 40a. Furthermore, in this case, the high-pressure turbine 40a and the intermediate-pressure turbine 40b may be integrated, and the steam line 211 may be connected to a middle stage of the turbine to supply the steam evaporated in the intermediate-pressure evaporator 207. As described above, the heat recovery device 30 and the steam turbine 40 can be configured in a variety of ways that do not contradict the idea of the invention.

One end of an exhaust gas line 29 is connected to the heat recovery device 30 in order for the exhaust gas that has exchanged heat with the condensate and the exhaust steam from the high-pressure turbine 40a in the heat recovery device 30 to flow out of the heat recovery device 30. The other end of the exhaust gas line 29 is connected to a stack 10.

### <Operation of heat utilization system according to Embodiment 1 of present disclosure (Heat utilization method)>

Next, the operation of the heat utilization system according to Embodiment 1 of the present disclosure will be described. The combustor 22 of the gas turbine 20 is supplied with fuel through the fuel supply line 12. The combustor 22 is supplied with the fuel and compressed air compressed by the compressor 21 and bums the fuel using the compressed air. The combustion gas produced by burning the fuel in the combustor 22 drives the turbine 23. The rotation of the compressor 21 and the turbine 23 drives the power generation device 26 to generate electricity.

The exhaust gas discharged from the turbine 23 is introduced into the heat recovery device 30 through the exhaust gas line 28. In the heat recovery device 30, the exhaust gas is cooled by heat exchange between the exhaust gas and water. The exhaust gas is also cooled by heat exchange between the exhaust gas and the exhaust steam discharged from the high-pressure turbine 40a, as described below. The exhaust gas cooled in the heat recovery device 30 flows through the exhaust gas line 29 and is emitted into the atmosphere through the stack 10.

On the other hand, water heated by heat exchange with the exhaust gas in the heat recovery device 30 flows out of the heat recovery device 30 as two steams with different pressures. The steam with higher pressure is supplied to the high-pressure turbine 40a through the steam supply line 31 to drive the high-pressure turbine 40a. On the other hand, the steam with lower pressure flows through the second steam line 32 as the second steam. The exhaust steam discharged from the high-pressure turbine 40a after driving the high-pressure turbine 40a flows through the exhaust steam line 43 back into the heat recovery device 30. In the heat recovery device 30, the exhaust steam discharged from the high-pressure turbine 40a is heated by heat exchange with the exhaust gas to become the reheat steam (first steam). The reheat steam is supplied to the intermediate-pressure turbine 40b through the reheat steam supply line 33 to drive the intermediate-pressure turbine 40b. The power generation device 41 is driven by the high-pressure turbine 40a and the intermediate-pressure turbine 40b to generate electricity.

The exhaust steam discharged from the intermediate-pressure turbine 40b after driving the intermediate-pressure turbine 40b flows through the exhaust steam line 51. By operating the heat demand facility inlet valve 52, the open/close valve 53, and the low-pressure turbine inlet valve 55, the exhaust steam flows into either the low-pressure turbine 40c or the district heating and hot water supply facility 60a, or both the low-pressure turbine 40c and the district heating and hot water supply facility 60a. The exhaust steam supplied to the low-pressure turbine 40c through the exhaust steam branch line 54 drives the low-pressure turbine 40c, which in turn drives the power generation device 42 to generate electricity.

The exhaust steam discharged from the low-pressure turbine 40c after driving the low-pressure turbine 40c flows through the exhaust steam line 70 into the condenser 71. The exhaust steam entering the condenser 71 condenses into condensate, which is circulated by the condensate pump 73 through the condensate line 72 and supplied to the heat recovery device 30 to exchange heat with the exhaust gas as described above.

In the case where at least part of the exhaust steam discharged from the intermediate-pressure turbine 40b is supplied to the district heating and hot water supply facility 60a, the exhaust steam is mixed with the second steam that has flowed through the second steam line 32 while flowing through the exhaust steam line 51, and the mixed steam enters the district heating and hot water supply facility 60a. As described above, if the open/close valve 53 is fully closed, only the second steam can be supplied to the district heating and hot water supply facility 60a. The second steam (and exhaust steam) entering the district heating and hot water supply facility 60a is used as a heat source for hot water supply and heating. The pressure of the second steam (and exhaust steam) in the district heating and hot water supply facility 60a can be adjusted by the pressure regulating valve 62. This allows the pressure in the district heating and hot water supply facility 60a to be kept high enough to provide the required amount of heat by obtaining sufficient steam density and sufficient heat transfer coefficient, and also allows the steam to condense at the temperature required in the district heating and hot water supply facility 60a. The second steam (and exhaust steam) used as a heat source in the district heating and hot water supply facility 60a condenses into water, which is circulated by the pump 63 through the discharge line 61, then flows into the condensate line 72 and is supplied to the heat recovery device 30 together with the condensate.

Thus, in the heat utilization system 1, not only the exhaust steam, which is steam that has driven the intermediate-pressure turbine 40b, but also the second steam supplied from the heat recovery device 30 can be used as a heat source for the district heating and hot water supply facility 60a, thus providing a sufficient amount of heat to the district heating and hot water supply facility 60a.

### <Control based on heat demand in heat demand facility>

Next, an explanation is given as to how to control the amount of heat supplied to the district heating and hot water supply facility 60a on the basis of heat demand in the district heating and hot water supply facility 60a in the case where at least part of the exhaust steam discharged from the intermediate-pressure turbine 40b is supplied to the district heating and hot water supply facility 60a. For example, the amount of heat supplied to the district heating and hot water supply facility 60a can be controlled by changing the opening degree of the pressure regulating valve 50a. When the opening degree of the pressure regulating valve 50a is decreased, i.e., the flow path area of the pressure regulating valve 50a is decreased, the pressure reduction amount (pressure drop) of the exhaust steam due to the pressure regulating valve 50a increases. Then, the pressure at the inlet of the pressure regulating valve 50a, i.e., the outlet of the intermediate-pressure turbine 40b (first steam turbine), increases, the expansion ratio of the intermediate-pressure turbine 40b (first steam turbine) decreases, and the output of the intermediate-pressure turbine 40b (first steam turbine) decreases, so that the temperature of the exhaust steam discharged from the intermediate-pressure turbine 40b (first steam turbine) rises. Thus, the amount of heat supplied to the district heating and hot water supply facility 60a increases. On the other hand, if the heat demand of the district heating and hot water supply facility 60a is low, the opening degree, or flow path area, of the pressure regulating valve 50a should be maximized. By decreasing the opening degree, or flow path area, of the pressure regulating valve 50a with an increase in heat demand in the district heating and hot water supply facility 60a, the temperature of the exhaust steam discharged from the intermediate-pressure turbine 40b (first steam turbine) rises, so that the amount of heat required to meet the heat demand in the district heating and hot water supply facility 60a can be supplied to the district heating and hot water supply facility 60a.

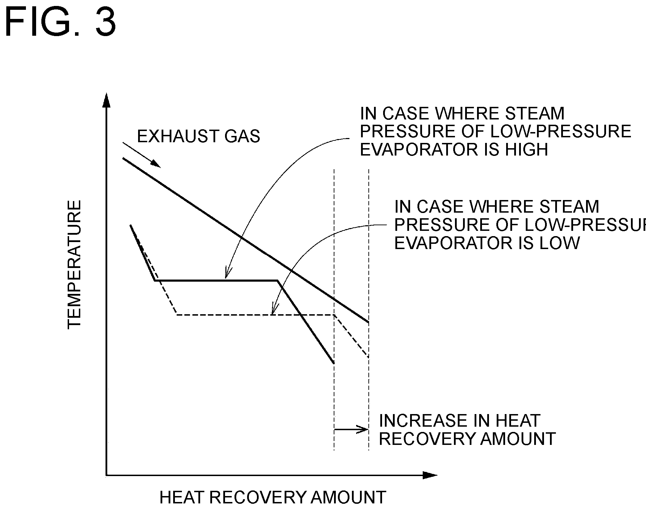

The following is an explanation of the effect of the heat recovery device 30 with the configuration shown in FIG. 2. The TQ diagram of FIG. 3 shows a line indicating the relationship between the temperature and the heat recovery amount of the condensate in the low-pressure evaporator 202 of the heat recovery device 30 (for high and low saturated vapor pressure in the low-pressure evaporator 202) and a line indicating the relationship between the temperature and the amount of heat of the exhaust gas. Lowering the saturated vapor pressure and saturated vapor temperature in the low-pressure evaporator 202, i.e., changing from the solid line in FIG. 3 for high saturated vapor pressure in the low-pressure evaporator 202 to the dashed line for low saturated vapor pressure in the low-pressure evaporator 202, increases the heat recovery amount in the latter compared with the former. In the present embodiment, by increasing the pressure reduction amount (pressure drop) with the pressure regulating valve 50a (pressure reduction part), the pressure in the exhaust steam line 51 downstream of the pressure regulating valve 50a (pressure reduction part) is kept low, so that the saturated vapor pressure in the second steam line 32 connected to the exhaust steam line 51 downstream of the pressure regulating valve 50a (pressure reduction part) and in the low-pressure evaporator 202 of the heat recovery device 30, which supplies steam to the second steam line 32, is also kept low. Thus, as shown in FIG. 3, the heat recovery amount of the condensate in the low-pressure evaporator 202 of the heat recovery device 30 can be increased. At the same time, by increasing the temperature of the exhaust steam discharged from the intermediate-pressure turbine 40b (first steam turbine) by the above-described operation, it is possible to further increase the amount of heat that can be supplied to the district heating and hot water supply facility 60a. In the present embodiment, by increasing the pressure reduction amount (pressure drop) with the pressure regulating valve 50a (pressure reduction part), the pressure upstream of the pressure regulating valve 50a (pressure reduction part) can be increased while keeping the pressure downstream of the pressure regulating valve 50a (pressure reduction part) low. Therefore, while keeping the saturated vapor pressure in the low-pressure evaporator 202 of the heat recovery device 30 low, the temperature and heat of the exhaust steam discharged from the intermediate-pressure turbine 40b (first steam turbine) can be increased, so that the amount of heat supplied to the district heating and hot water supply facility 60a (heat demand facility) can be increased.

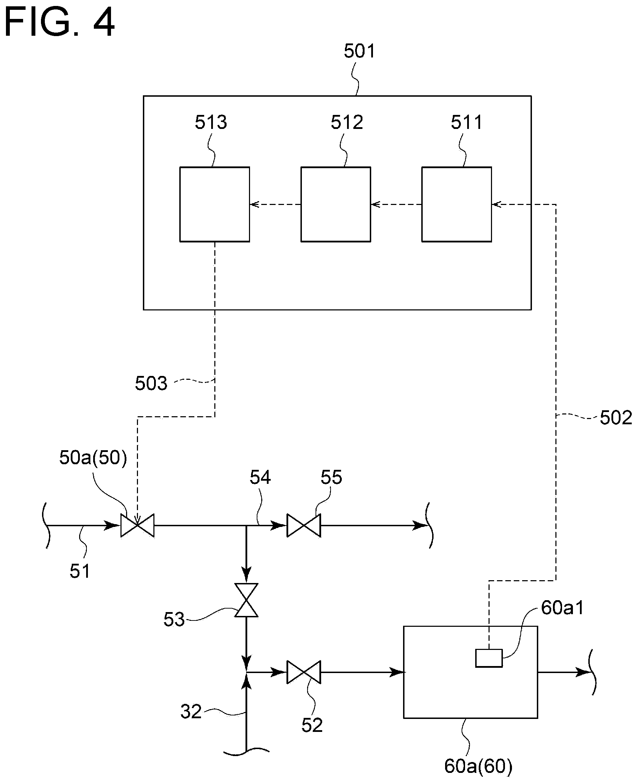

Next, an explanation is given as to the control of the opening degree or flow path area of the pressure regulating valve 50a (pressure reduction part) to meet the heat demand in the district heating and hot water supply facility 60a (heat demand facility) when the heat demand changes. As shown in FIG. 4, the heat utilization system 1 is equipped with a heat supply amount control device 501. The heat supply amount control device 501 includes a receiving part 511 configured to receive, from the district heating and hot water supply facility 60a (heat demand facility), a heat demand signal which is a signal related to heat demand in the district heating and hot water supply facility 60a (heat demand facility), a control signal generation part 512 configured to generate a control signal which is a signal for controlling the opening degree or flow path area of the pressure regulating valve 50a, using the heat demand signal, and a control signal transmission part 513 configured to transmit the control signal to the pressure regulating valve 50a. The receiving part 511 is electrically connected to the control signal generation part 512, and the control signal generation part 512 is electrically connected to the control signal transmission part 513.

The receiving part 511 is electrically connected to the district heating and hot water supply facility 60a (heat demand facility), for example, a control device 60a1 that controls the operation of the district heating and hot water supply facility 60a (heat demand facility) via a heat demand signal line 502 so that it can receive the heat demand signal from the district heating and hot water supply facility 60a (heat demand facility). The control signal transmission part 513 is electrically connected to a drive part (not shown) of the pressure regulating valve 50a (pressure reduction part) via a control signal line 503 to transmit the control signal to the drive part to control the opening degree or flow path area of the pressure regulating valve 50a (pressure reduction part). In the case where each or either one of the heat demand signal transmission/reception between the receiving part 511 and the district heating and hot water supply facility 60a (heat demand facility) and the control signal transmission/reception between the control signal transmission part 513 and the pressure regulating valve 50a (pressure reduction part) are performed by wireless communication, either one or both of the heat demand signal line 502 and the control signal line 503 can be omitted.

The heat supply amount control device 501 includes, for example, a Central Processing Unit (CPU), a Random Access Memory (RAM), a Read Only Memory (ROM), a computer-readable storage medium, and the like. Then, a series of processes for realizing various functions is stored in the storage medium or the like in the form of a program, as an example. The CPU reads the program out to the RAM or the like and executes processing/calculation of information, thereby realizing the various functions. A configuration where the program is installed in the ROM or another storage medium in advance, a configuration where the program is provided in a state of being stored in the computer-readable storage medium, a configuration where the program is distributed via a wired or wireless communication means, etc., may be applied. The computer-readable storage medium is a magnetic disk, a magneto-optical disk, a CD-ROM, a DVD-ROM, a semiconductor memory, etc.

In the case where the heat supply amount control device 501 is installed, the heat demand in the district heating and hot water supply facility 60a (heat demand facility) is transmitted continuously or intermittently as a heat demand signal, and the receiving part 511 of the heat supply amount control device 501 receives the heat demand signal. Using the heat demand signal received by the receiving part 511, the control signal generation part 512 generates a control signal, which is a signal to control the opening degree or flow path area of the pressure regulating valve 50a (pressure reduction part). For example, a map representing the relationship between the opening degree or flow path area of the pressure regulating valve 50a (pressure reduction part) and the exhaust steam temperature, and a map representing the relationship between changes in exhaust steam flow rate and temperature and changes in heat demand in the district heating and hot water supply facility 60a (heat demand facility) may be incorporated in advance in the control signal generation part 512, and on the basis of these maps, the opening degree or flow path area of the pressure regulating valve 50a (pressure reduction part) may be determined to generate the control signal. The control signal transmission part 513 transmits the control signal generated by the control signal generation part 512 to the drive part of the pressure regulating valve 50a. The drive part of the pressure regulating valve 50a adjusts the opening degree or flow path area of the pressure regulating valve 50a in response to the control signal, so that the pressure regulating valve 50a (pressure reduction part) has an opening degree or flow path area that meets the heat demand in the district heating and hot water supply facility 60a (heat demand facility).

If the heat demand in the district heating and hot water supply facility 60a (heat demand facility) is low, a control signal is generated to maximize the opening degree or flow path area of the pressure regulating valve 50a (pressure reduction part), i.e., to minimize the pressure reduction amount. If the heat demand in the district heating and hot water supply facility 60a (heat demand facility) increases, a control signal is generated to decrease the opening degree or flow path area of the pressure regulating valve 50a (pressure reduction part), i.e., to increase the pressure reduction amount. If the heat demand in the district heating and hot water supply facility 60a (heat demand facility) decreases, a control signal is generated to increase the opening degree or flow path area of the pressure regulating valve 50a (pressure reduction part), i.e., to decrease the pressure reduction amount.

As described below, by adjusting not only the opening degree of the pressure regulating valve 50a (pressure reduction part), but also the opening degree of the heat demand facility inlet valve 52 or the low-pressure turbine inlet valve 55 (exhaust steam supply amount adjustment part), which are flow control valves, the amount of heat required to meet the wide range of heat demand in the district heating and hot water supply facility 60a can be supplied to the district heating and hot water supply facility 60a (heat demand facility). As shown in FIG. 1, if the heat demand in the district heating and hot water supply facility 60a (heat demand facility) is small, the opening degree, or flow path area, of the pressure regulating valve 50a (pressure reduction part) is maximized. The heat demand in the district heating and hot water supply facility 60a (heat demand facility) is compared with the heat supply to the district heating and hot water supply facility 60a (heat demand facility), and if the heat demand is greater, the opening degree of the low-pressure turbine inlet valve 55 (exhaust steam supply amount adjustment part) is decreased. This decreases the supply amount of the exhaust steam to the low-pressure turbine 40c, and in turn increases the supply amount of the exhaust steam to the district heating and hot water supply facility 60a (heat demand facility), resulting in an increase in the amount of heat supplied to the district heating and hot water supply facility 60a (heat demand facility) to meet the heat demand in the district heating and hot water supply facility 60a (heat demand facility). Conversely, if the heat demand is smaller in the above comparison, the opening degree of the low-pressure turbine inlet valve 55 (exhaust steam supply amount adjustment part) is increased. This increases the supply amount of the exhaust steam to the low-pressure turbine 40c (second steam turbine), and in turn decreases the supply amount of the exhaust steam to the district heating and hot water supply facility 60a (heat demand facility), resulting in an decrease in the amount of heat supplied to the district heating and hot water supply facility 60a (heat demand facility) to meet the heat demand in the district heating and hot water supply facility 60a (heat demand facility). In this case, since the pressure reduction amount of the exhaust steam by the pressure regulating valve 50a (pressure reduction part) is minimized, the heat demand in the district heating and hot water supply facility 60a (heat demand facility) can be met without reducing the output of the intermediate-pressure turbine 40b (first steam turbine). As described above, when the heat demand in the district heating and hot water supply facility 60a (heat demand facility) is low and the heat demand in the district heating and hot water supply facility 60a (heat demand facility) can be met even with the pressure regulating valve 50a (pressure reduction part) at its maximum opening, or maximum flow path area, and with the pressure reduction amount (pressure drop) at its minimum, it is preferable to maintain the maximum opening degree, or the maximum flow area, of the pressure regulating valve 50a (pressure reduction part) and the minimum pressure reduction amount (pressure drop). This is because the smaller the pressure reduction amount (pressure drop) in the pressure regulating valve 50a (pressure reduction part), the greater the output of the intermediate-pressure turbine 40b (first steam turbine) and the higher the plant efficiency.

Even if the low-pressure turbine inlet valve 55 (exhaust steam supply amount adjustment part) is fully closed and the supply of the exhaust steam to the low-pressure turbine 40c (second steam turbine) is stopped, when the heat demand is greater in the above comparison, the pressure and temperature of the exhaust steam can be adjusted by adjusting the opening degree of the above-described pressure regulating valve 50a (pressure reduction part) to meet the heat demand in the district heating and hot water supply facility 60a (heat demand facility).

In the above-described control, the opening degree of the pressure regulating valve 50a (pressure reduction part) starts from the fully open state, but the present disclosure is not limited to this embodiment. The opening degree of the pressure regulating valve 50a (pressure reduction part) may start from any opening degree adjusted to maintain a desired output of the high-pressure turbine 40a and the intermediate-pressure turbine 40b. In this state, control by the low-pressure turbine inlet valve 55 (exhaust steam supply amount adjustment part) is performed, and if the heat demand in the district heating and hot water supply facility 60a (heat demand facility) cannot be met even when the low-pressure turbine inlet valve 55 (exhaust steam supply amount adjustment part) is fully closed, the opening degree of the pressure regulating valve 50a (pressure reduction component) may be adjusted to increase the heat supply to the district heating and hot water supply facility 60a (heat demand facility).

In the above-described control, the heat supply to the district heating and hot water supply facility 60a (heat demand facility) is regulated by adjusting the opening degree of the low-pressure turbine inlet valve 55, but the present disclosure is not limited to this embodiment. The heat supply to the district heating and hot water supply facility 60a (heat demand facility) may be regulated by adjusting the opening degree of the heat demand facility inlet valve 52. In this case, the opening degree of the heat demand facility inlet valve 52 is changed in the opposite direction to the opening degree of the low-pressure turbine inlet valve 55. Specifically, in the above-described control, when decreasing the opening degree of the low-pressure turbine inlet valve 55, the opening degree of the heat demand facility inlet valve 52 is increased. This is because the exhaust steam discharged from the intermediate-pressure turbine 40b (first steam turbine) flows into either the low-pressure turbine 40c (second steam turbine) or the district heating and hot water supply facility 60a (heat demand facility), so if the supply amount of the exhaust steam to the district heating and hot water supply facility 60a (heat demand facility) increases, the supply amount of the exhaust steam to the low-pressure turbine 40c (the second steam turbine) decreases, while if the supply amount of the exhaust steam to the district heating and hot water supply facility 60a (heat demand facility) decreases, the supply amount of the exhaust steam to the low-pressure turbine 40c (the second steam turbine) increases. Thus, the heat demand facility inlet valve 52 and the low-pressure turbine inlet valve 55 constitute the exhaust steam supply amount adjustment part for adjusting the supply amount of the exhaust steam supplied to the low-pressure turbine 40c (second steam turbine).

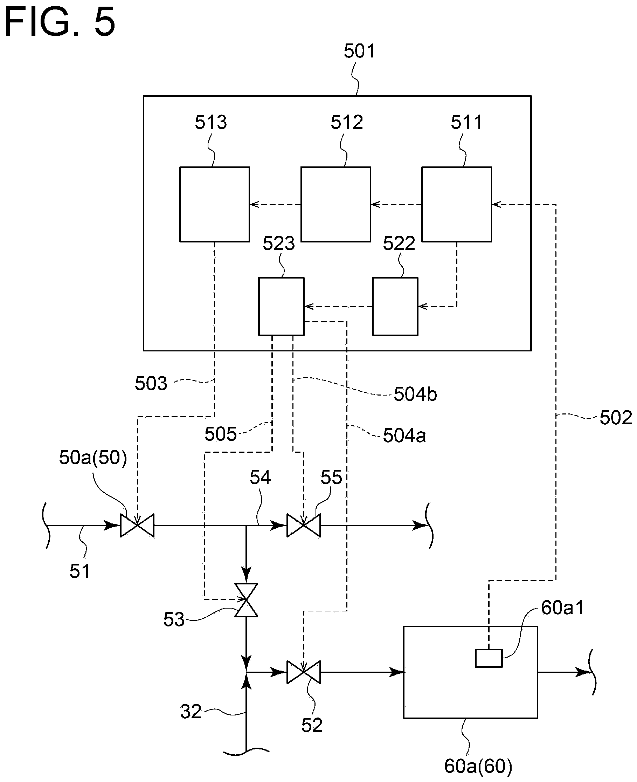

Next, an explanation is given as to the control of the exhaust steam supply amount adjustment part to meet the heat demand in the district heating and hot water supply facility 60a (heat demand facility) when the heat demand changes. As shown in FIG. 5, the heat supply amount control device 501 further includes an adjustment signal generation part 522 configured to generate an adjustment signal for adjusting the supply amount of the exhaust steam supplied to the low-pressure turbine 40c (second steam turbine), and an adjustment signal transmission part 523 configured to transmit the adjustment signal to the exhaust steam supply amount adjustment part (heat demand facility inlet valve 52 or low-pressure turbine inlet valve 55). The adjustment signal generation part 522 is electrically connected to the receiving part 511, and the adjustment signal generation part 522 is electrically connected to the adjustment signal transmission part 523.

The adjustment signal transmission part 523 is electrically connected to a drive part (not shown) of the heat demand facility inlet valve 52 or the low-pressure turbine inlet valve 55 (exhaust steam supply amount adjustment part) via an adjustment signal line 504a or 504b to transmit the adjustment signal to the drive part to control the opening degree of the heat demand facility inlet valve 52 or the low-pressure turbine inlet valve 55 (exhaust steam supply amount adjustment part). Further, the adjustment signal transmission part 523 is electrically connected to a drive part (not shown) of the open/close valve 53 via an open/close control signal line 505 to transmit an open/close control signal to the drive part of the open/close valve 53 to open or close the open/close valve 53. In the case where each or either one of the adjustment signal transmission/reception between the adjustment signal transmission part 523 and the heat demand facility inlet valve 52 or the low-pressure turbine inlet valve 55 (exhaust steam supply amount adjustment part) and the open/close control signal transmission/reception between the adjustment signal transmission part 523 and the open/close valve 53 are performed by wireless communication, either one or both of the adjustment signal line 504a or 504b and the open/close control signal line 505 can be omitted.

As described above, when supplying the amount of heat required to meet the wide range of heat demand in the district heating and hot water supply facility 60a (heat demand facility) to the district heating and hot water supply facility 60a (heat demand facility) by adjusting the opening degree of the heat demand facility inlet valve 52 or the low-pressure turbine inlet valve 55 (exhaust steam supply amount adjustment part), the adjustment signal generation part 522 generates an adjustment signal to adjust the supply amount of the exhaust steam to the low-pressure turbine 40c (the second steam turbine), using the heat demand signal received by the receiving part 511. For example, a map representing the relationship between the opening degree of the heat demand facility inlet valve 52 or the low-pressure turbine inlet valve 55 (exhaust steam supply amount adjustment part) and the supply amount of the exhaust steam to the low-pressure turbine 40c (second steam turbine), and a map representing the relationship between changes in supply amount of the exhaust steam to the district heating and hot water supply facility 60a (heat demand facility) and changes in heat demand in the district heating and hot water supply facility 60a (heat demand facility) may be incorporated in advance in the adjustment signal generation part 522, and on the basis of these maps, the opening degree of the heat demand facility inlet valve 52 or the low-pressure turbine inlet valve 55 (exhaust steam supply amount adjustment part) may be determined to generate the adjustment signal. The adjustment signal transmission part 523 transmits the adjustment control signal generated by the adjustment signal generation part 522 to the drive part of the heat demand facility inlet valve 52 or the low-pressure turbine inlet valve 55 (exhaust steam supply amount adjustment part). The drive part of the heat demand facility inlet valve 52 or the low-pressure turbine inlet valve 55 (exhaust steam supply amount adjustment part) adjusts the opening degree of the heat demand facility inlet valve 52 or the low-pressure turbine inlet valve 55 (exhaust steam supply amount adjustment part) in response to the adjustment signal, so that the supply amount of the exhaust steam to the low-pressure turbine 40c (second steam turbine) changes, and the district heating and hot water supply facility 60a (heat demand facility) is supplied with the amount of heat required to meet the heat demand in the district heating and hot water supply facility 60a (heat demand facility).

If the heat demand in the district heating and hot water supply facility 60a (heat demand facility) is low, an adjustment signal is generated to minimize the opening degree of the heat demand facility inlet valve 52 or to maximize the opening degree of the low-pressure turbine inlet valve 55. Alternatively, the adjustment signal generation part 522 may generate an open/close control signal to close the open/close valve 53, and the adjustment signal transmission part 523 may transmit the open/close control signal to the open/close valve 53, so that the open/close valve 53 is closed in response to the open/close control signal. If the heat demand in the district heating and hot water supply facility 60a increases, an adjustment signal is generated to increase the opening degree of the heat demand facility inlet valve 52 or to decrease the opening degree of the low-pressure turbine inlet valve 55. This increases the supply amount of the exhaust steam to the district heating and hot water supply facility 60a (heat demand facility), enabling the district heating and hot water supply facility 60a (heat demand facility) to meet the increased heat demand. Depending on the heat demand in the district heating and hot water supply facility 60a (heat demand facility), an adjustment signal is generated to set the opening degree of the low-pressure turbine inlet valve 55 to zero, i.e., to fully close the low-pressure turbine inlet valve 55. This causes the entire amount of exhaust steam to be supplied to the district heating and hot water supply facility 60a (heat demand facility), but if the heat demand in the district heating and hot water supply facility 60a (heat demand facility) still cannot be met, the opening degree or flow path area of the pressure regulating valve 50a (pressure reduction part) is adjusted by the above-described control. If the heat demand in the district heating and hot water supply facility 60a (heat demand facility) decreases, an adjustment signal is generated to decrease the opening degree of the heat demand facility inlet valve 52 or to increase the opening degree of the low-pressure turbine inlet valve 55. This decreases the supply amount of the exhaust steam to the district heating and hot water supply facility 60a, enabling the district heating and hot water supply facility 60a (heat demand facility) to meet the decreased heat demand.

The above-described control based on the heat demand in the district heating and hot water supply facility 60a (heat demand facility) can also be applied to a configuration where the second steam is not supplied to the district heating and hot water supply facility 60a (heat demand facility). This configuration can be achieved, for example, by removing the configuration to generate the second steam (low-pressure economizer 201, low-pressure evaporator 202, and low-pressure superheater 203 (see FIG. 2)) from the heat recovery device 30, or by relocating the open/close valve 53 in the exhaust steam line 51 to the second steam line 32 and closing the open/close valve 53. Also in this configuration, by adjusting the opening degree or flow path area of the pressure regulating valve 50a (pressure reduction part), the pressure of the exhaust steam decreases, and the pressure expansion ratio of the intermediate-pressure turbine 40b (first steam turbine) decreases, resulting in a reduction in the output of the intermediate-pressure turbine 40b (first steam turbine). This increases the temperature of the exhaust steam and thus increases the amount of heat supplied to the district heating and hot water supply facility 60a (heat demand facility), allowing a sufficient amount of heat to be supplied to the district heating and hot water supply facility 60a (heat demand facility). Additionally, in this configuration, by adjusting the supply amount of the exhaust steam to the low-pressure turbine 40c (second steam turbine), the supply amount of the exhaust steam to the district heating and hot water supply facility 60a (heat demand facility) is adjusted, so that a sufficient amount of heat can be supplied to the district heating and hot water supply facility 60a (heat demand facility).

### <Modification of pressure reduction part>

In Embodiment 1, the pressure reduction part 50 is the pressure regulating valve 50a, but the present disclosure is not limited to this embodiment. Some modifications of the pressure reduction part 50 will be illustrated below. The modifications shown below are only examples and are not intended to limit the embodiments of the pressure reduction part 50.

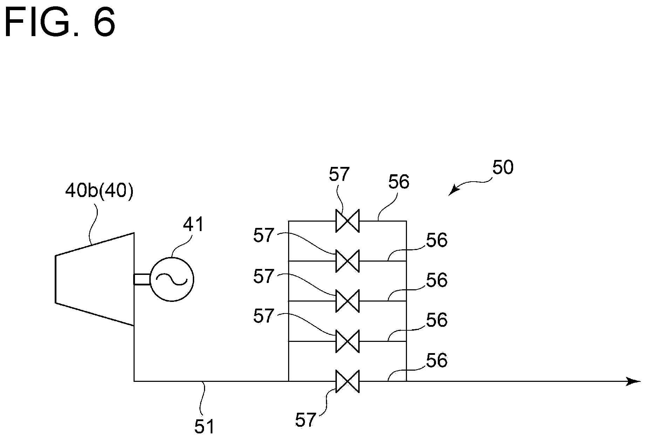

As shown in FIG. 6, the pressure reduction part 50 may include a plurality of branch lines 56 arranged in parallel with each other, and an open/close valve 57 disposed in each branch line 56. By changing the number of branch lines 56 that allows the exhaust steam to flow by opening or closing each open/close valve 57, the pressure drop of the exhaust steam due to the pressure reduction part 50 changes, enabling the adjustment of the pressure reduction amount of the exhaust steam. Specifically, all open/close valves 57 are opened to minimize the pressure reduction amount, and the number of closed open/close valves 57 are increased to increase the pressure reduction amount of the exhaust steam. As the number of closed open/close valves 57 increases, the number of branch lines 56 that allow the exhaust steam to flow decreases, i.e., the flow path area of the pressure reduction part 50 decreases, and the pressure drop of the exhaust steam due to the pressure reduction part 50 increases, so that the pressure reduction amount of the exhaust steam increases. The number of branch lines 56 can be changed as desired.

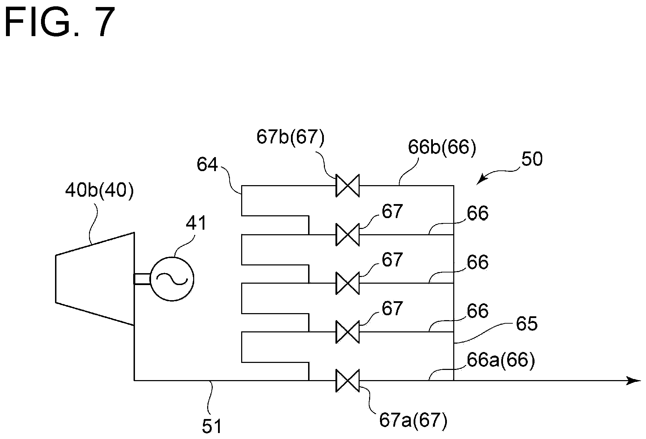

As shown in FIG. 7, the pressure reduction part 50 may include a first line 64 branching off from the exhaust steam line 51 and having a plurality of fold portions, a second line 65 branching off from the exhaust steam line 51 at a position downstream of the first line 64, a plurality of connecting lines arranged in parallel with each other and connected at one end to the first line 64 and at the other end to the second line 65, and an open/close valve 67 disposed in each connecting line 66. By opening any one of the open/close valves 67 in each connecting line 66, the distance through which the exhaust steam flows in the first line 64, the connecting line 66, and the second line 65 in turn changes, and the pressure drop of the exhaust steam due to the pressure reduction part 50 changes, so the pressure reduction amount of the exhaust steam can be adjusted. Specifically, to minimize the pressure reduction amount, the open/close valve 67a in the connecting line 66a that connects the branch points where the first line 64 and the second line 65 branch off from the exhaust steam line 51 should be open. To maximize the pressure reduction amount of the exhaust steam, the open/close valve 67b in the connecting line 66b that is the furthest away from the connecting line 66a should be open. The number of connecting lines 66 can be changed as desired. Further, the second line 65 may have a plurality of fold portions, or both the first line 64 and the second line 65 may have a plurality of fold portions. The greater the number of fold portions or the longer each fold portion, the greater the difference in pressure drop due to changing the open/close valve 67, and thus the wider the range of pressure reduction amount that can be adjusted by the pressure reduction part 50.

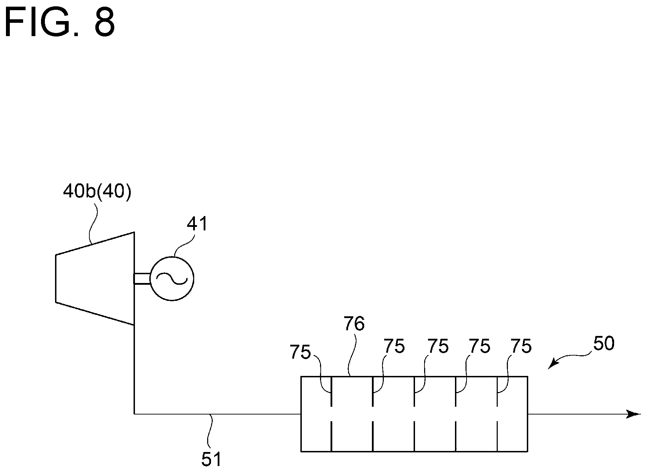

As shown in FIG. 8, the pressure reduction part 50 may be configured with a variable number of orifices 75 arranged in series with the exhaust steam line 51. A case 76 for receiving the orifices 75 may be disposed in the exhaust steam line 51 as the portion into which the orifices 75 can be inserted. The pressure reduction part 50 may be configured to manually add or remove the orifices 75, or it may be configured to add or remove the orifices 75 with a hydraulic cylinder or the like. In this pressure reduction part 50, the number of orifices 75 is set to zero to minimize the pressure reduction amount, and some orifices 75 are added to increase the pressure reduction amount, and the orifices 75 are removed to decrease the pressure reduction amount.

The pressure reduction part 50 in the configuration shown in FIGs. 6 to 8 is disposed in the exhaust steam line 51 to reduce the pressure of the exhaust steam discharged from the intermediate-pressure turbine 40b. However, the pressure reduction part 50 is not limited to this configuration but may be configured to reduce the pressure of the exhaust steam that has driven the intermediate-pressure turbine 40b but has not been discharged yet from the intermediate-pressure turbine 40b. Two examples of the pressure reduction part 50 with this configuration will be described below.

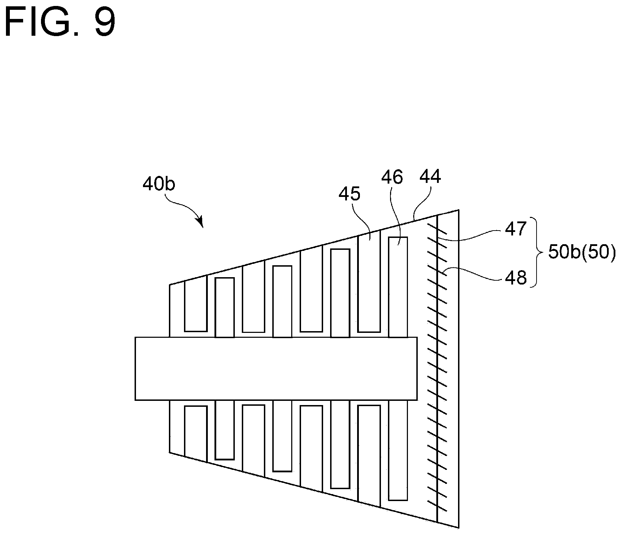

As shown in FIG. 9, the pressure reduction part 50 may be a louver 50b disposed downstream of the last-stage stator vane 45 and rotor blade 46 in the casing 44 of the intermediate-pressure turbine 40b. The louver 50b has a plurality of slat-like members 48 disposed on a shaft part 47 in parallel with each other. By changing the angle of the slat-like members 48, the flow path area for the exhaust steam passing through the louver 50b after driving the intermediate-pressure turbine 40b can be increased or decreased. The louvers 50b can adjust the pressure reduction amount of the exhaust steam by changing the angle of the slat-like members 48.

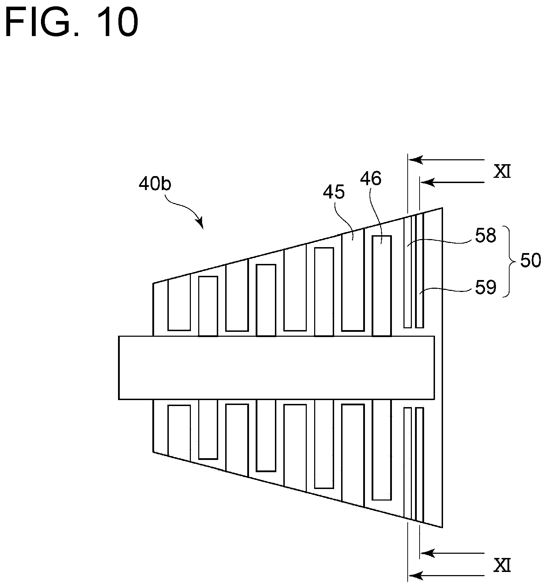

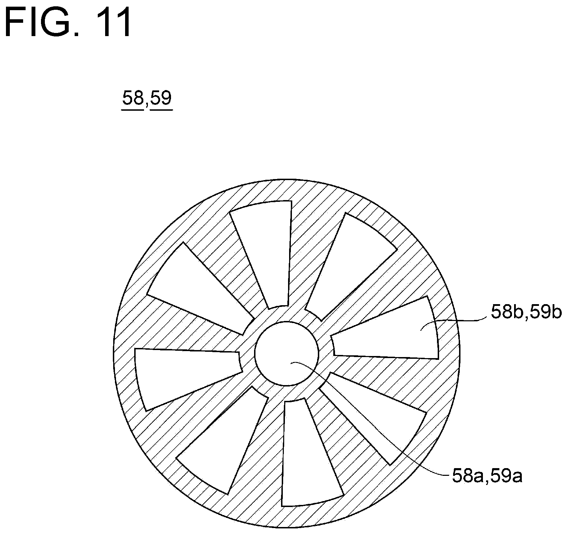

As shown in FIG. 10, the pressure reduction part 50 may have two disks 58, 59 disposed downstream of the last-stage stator vane 45 and rotor blade 46 in the casing 44 of the intermediate-pressure turbine 40b. As shown in FIG. 11, the disks 58, 59 have the same configuration, with holes 58b, 59b of the same shape arranged around a hole 58a, 59a, into which the rotational shaft of the intermediate-pressure turbine 40b is inserted, at regular intervals along the circumferential direction of the hole 58a, 59a. Rotating either one of the disks 58 or 59 changes the area where the holes 58a and 59a overlap. Since the area where the holes 58a and 59a overlap is the flow path for the exhaust steam that has driven the intermediate-pressure turbine 40b, rotating either one of the disks 58 or 59 changes the flow path area for the exhaust steam, enabling the adjustment of the pressure reduction amount of the exhaust steam.

### <Modification of heat utilization system according to Embodiment 1 of present disclosure>

In Embodiment 1, the pressure regulating valve 62 is a single valve, but it is not limited to this embodiment. As well as the pressure reduction part 50, the pressure regulating valve 62 may have the same configuration as any of the modifications of the pressure reduction part 50 shown in FIGs. 2 to 4.

In Embodiment 1, the discharge source which discharges the heating fluid is the gas turbine 20, but it is not limited to this embodiment. Any configuration can be used as the discharge source as long as it discharges a fluid having a temperature at which water can be evaporated into steam by heat exchange between the fluid and water in the heat recovery device 30. For example, boilers, gas engines, and solid oxide fuel cells can be used as the discharge source, and exhaust gas therefrom can be used as the heating fluid. Examples of other combinations of the discharge source and the heating fluid include chemical plant reactors and products after exothermic reactions, waste incinerators and combustion gases, solar heating devices and heat transfer gases, geothermal heating devices and heat transfer gases, nuclear reactors and heat transfer gases. As the heat transfer gases, helium, argon, carbon dioxide, and nitrogen can be used.

### (Embodiment 2)

Next, the heat utilization system according to Embodiment 2 will be described. The heat utilization system according to Embodiment 2 differs from Embodiment 1 in that the heat demand facility 60 is changed to a facility (carbon dioxide recovery device) that recovers carbon dioxide from exhaust gas of the gas turbine 20. In Embodiment 2, the same constituent elements as those in Embodiment 1 are associated with the same reference signs and not described again in detail.

### <Configuration of heat utilization system according to Embodiment 2 of present disclosure>

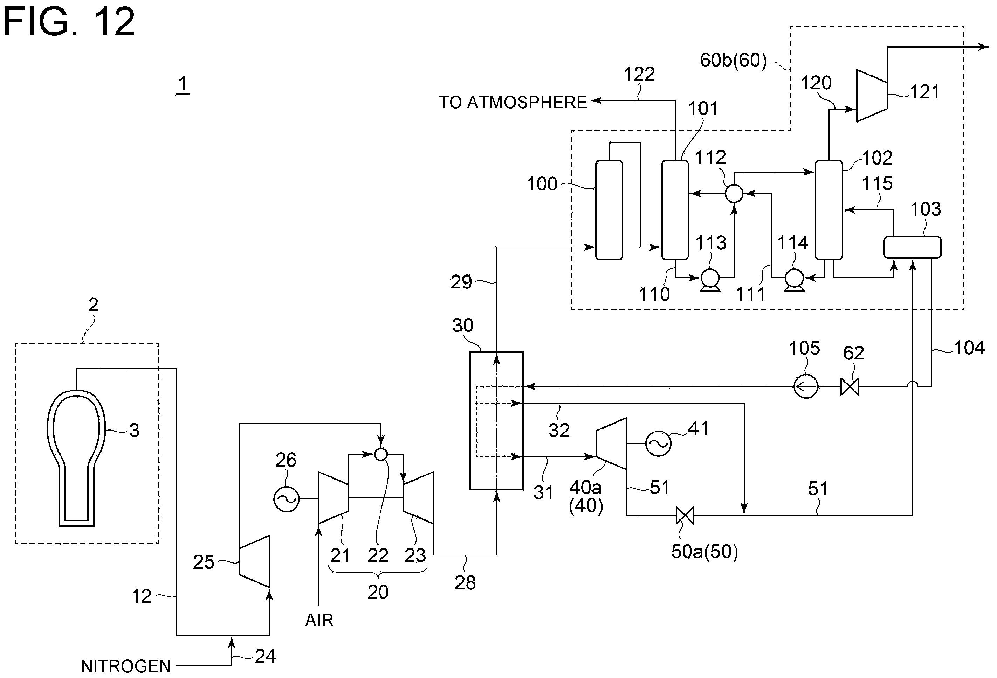

As shown in FIG. 12, in the heat utilization system 1 according to Embodiment 2 of the present disclosure, exhaust gas from the steel manufacturing facility 2 is used as fuel to be burned in the combustor 22 of the gas turbine 20. The steel manufacturing facility 2 has a molten gasifier 3 and manufactures iron or steel in the molten gasifier 3 using coal and iron ore as raw materials. Therefore, exhaust gas discharged from the molten gasifier 3 contains combustible components (e.g., carbon monoxide) and carbon dioxide. The fuel supply line 12 may be connected to the molten gasifier 3, and the fuel supply line 12 may be equipped with a compressor 25 for boosting the exhaust gas from the molten gasifier 3. Further, a nitrogen supply line 24 may be connected to the fuel supply line 12. The heating value of the fuel in the combustor 22 can be adjusted by mixing the fuel flowing through the fuel supply line 12 with nitrogen supplied from the nitrogen supply line 24.

Although the other configurations may be the same as those of Embodiment 1 to constitute Embodiment 2, some of the configurations of Embodiment 1 may be changed as described below to constitute Embodiment 2. In the heat utilization system 1 according to Embodiment 2 of the present disclosure, the steam turbine 40 has only a high-pressure turbine 40a. Therefore, in Embodiment 2, the high-pressure turbine 40a constitutes the first steam turbine, and there is no second steam turbine. The exhaust steam line 51 is provided to connect the high-pressure turbine 40a and the heat demand facility 60. In the heat recovery device 30, the heat exchange between water and exhaust gas evaporates the water to produce two steams with different pressures. As described below, the steam with higher pressure is supplied to the high-pressure turbine 40a to drive the high-pressure turbine 40a, so the steam with higher pressure corresponds to the first steam. The steam with lower pressure corresponds to the second steam, as in Embodiment 1.

The heat demand facility 60 is a carbon dioxide recovery device 60b for recovering carbon dioxide from the exhaust gas discharged from the gas turbine 20, more specifically, the exhaust gas that has exchanged heat with water in the heat recovery device 30. The carbon dioxide recovery device 60b includes a cooling tower 100 configured to cool the exhaust gas discharged from the heat recovery device 30, an absorption tower 101 configured to absorb carbon dioxide contained in the exhaust gas cooled in the cooling tower 100 into an absorption solution, a regeneration tower 102 configured to release carbon dioxide by heating the absorption solution that has absorbed carbon dioxide in the absorption tower 101, and a reboiler 103 for heating the absorption solution in the regeneration tower 102. The exhaust gas line 29 is connected to the cooling tower 100. However, the cooling tower 100 in the carbon dioxide recovery device 60b is not an essential component. If the temperature of the exhaust gas discharged from the heat recovery device 30 is sufficiently low and the concentration of solid components such as sulfur oxides and dust contained in the exhaust gas is also sufficiently low, the cooling tower 100 may be eliminated. If the carbon dioxide recovery device 60b does not include the cooling tower 100, the heat recovery device 30 and the absorption tower 101 are connected by the exhaust gas line 29.

The exhaust steam line 51, connected at one end to the high-pressure turbine 40a, is connected at the other end to the reboiler 103, so that the high-pressure turbine 40a communicates with the reboiler 103. Further, the heat recovery device 30 communicates with the reboiler 103 though a water supply line 104. The water supply line 104 is equipped with a pressure regulating valve 62 and a feed pump 105 disposed downstream of the pressure regulating valve 62.

The absorption tower 101 and the regeneration tower 102 are communicated through a rich absorption solution line 110 connecting the bottom of the absorption tower 101 to a position above the bottom of the regeneration tower 102, and a lean absorption solution line 111 connecting the bottom of the regeneration tower 102 to a position above the bottom of the absorption tower 101. As described below, rich absorption solution, which is the absorption solution containing a large amount of carbon dioxide, flows through the rich absorption solution line 110, and lean absorption solution, which is the absorption solution with a relatively lower carbon dioxide content than the rich absorption solution by releasing carbon dioxide from the rich absorption solution, flows through the lean absorption solution line 111. A heat exchanger 112 is disposed to exchange heat between the rich absorption solution flowing through the rich absorption solution line 110 and the lean absorption solution flowing through the lean absorption solution line 111. The rich absorption solution line 110 is equipped with a rich absorption solution pump 113 between the absorption tower 101 and the heat exchanger 112. The lean absorption solution line 111 is equipped with a lean absorption solution pump 114 between the regeneration tower 102 and the heat exchanger 112.

The top of the absorption tower 101 is connected to an exhaust line 122 for emitting the gas in the absorption tower 101 into the atmosphere. The regeneration tower 102 is provided with a circulation line 115 for circulating the absorption solution so that the absorption solution in the regeneration tower 102 is extracted from the bottom and returned into the regeneration tower 102. The circulation line 115 is provided to pass through the reboiler 103. The top of the regeneration tower 102 is connected to an outflow line 120 through which the gas in the regeneration tower 102, specifically, the gas containing carbon dioxide released from the absorption solution, flows out of the regeneration tower 102. The outflow line 120 may be equipped with a booster 121 for boosting the gas.

As described in detail below, in Embodiment 2, the absorption solution is heated in the reboiler 103 of the carbon dioxide recovery device 60b, which is the heat demand facility 60, by heat exchange between the mixed steam of second steam and exhaust steam discharged from the high-pressure turbine 40a and the absorption solution. Therefore, the reboiler 103 corresponds to the heat exchange mechanism for heating the object to be heated, the absorption solution.

<Operation of heat utilization system according to Embodiment 2 of present disclosure (Heat utilization method)>

Next, the operation of the heat utilization system 1 according to Embodiment 2 of the present disclosure will be described. As a result of manufacturing iron or steel in the steel manufacturing facility 2, exhaust gas is discharged from the molten gasifier 3. The exhaust gas discharged from the molten gasifier 3 is supplied as fuel to the combustor 22 of the gas turbine 20 through the fuel supply line 12. If the compressor 25 is provided in the fuel supply line 12, the exhaust gas is boosted by the compressor 25 and then supplied to the combustor 22. The operations of the gas turbine 20 and the power generation device 26 are the same as in Embodiment 1.

In the heat recovery device 30, the exhaust gas from the gas turbine 20 is cooled by heat exchange between the exhaust gas and water, as in Embodiment 1. The cooled exhaust gas flows through the exhaust gas line 29 into the cooling tower 100 of the carbon dioxide recovery device 60b. If the carbon dioxide recovery device 60b has no cooling tower 100, the exhaust gas flows into the absorption tower 101.

The water heated by heat exchange with the exhaust gas in the heat recovery device 30 flows out of the heat recovery device 30 as the first steam and the second steam with different pressures. The first steam is supplied to the high-pressure turbine 40a through the steam supply line 31 to drive the high-pressure turbine 40a. The power generation device 41 is driven by the high-pressure turbine 40a to generate electricity. On the other hand, the second steam flows through the second steam line 32. The exhaust steam discharged from the high-pressure turbine 40a after driving the high-pressure turbine 40a is mixed with the second steam that has flowed through the second steam line 32 while flowing through the exhaust steam line 51, and the mixed steam enters the reboiler 103 of the carbon dioxide recovery device 60b.

As described below, the mixed steam of exhaust steam and second steam entering the reboiler 103 is cooled by heat exchange with the lean absorption solution flowing through the circulation line 115. In this case, the pressure of the mixed fluid in the reboiler 103 can be adjusted by the pressure regulating valve 62. This allows the pressure in the reboiler 103 to be kept high enough to provide the required amount of heat by obtaining sufficient steam density and sufficient heat transfer coefficient, and also allows the steam to condense at the temperature required in the reboiler 103. The mixed steam that has exchanged heat with the lean absorption solution in the reboiler 103 condensates into water, and the water is circulated by the feed pump 105 through the water supply line 104 and supplied to the heat recovery device 30 to exchange heat with the exhaust gas.

As described above, the exhaust gas entering the cooling tower 100 is cooled by gas-liquid contact with cooling water falling in the cooling tower 100 as it rises in the cooling tower 100. If the exhaust gas contains sulfur oxides or solid components, the gas-liquid contact between the exhaust gas and the cooling water traps the sulfur oxides or solid components in the cooling water and removes them from the exhaust gas.

The exhaust gas discharged from the cooling tower 100 flows into the absorption tower 101. In the absorption tower 101, as the exhaust gas rises and the lean absorption solution falls, the exhaust gas and the lean absorption solution come into gas-liquid contact, and carbon dioxide contained in the exhaust gas is absorbed into the lean absorption solution. By absorbing carbon dioxide, the lean absorption solution becomes rich absorption solution and is collected at the bottom of the absorption tower 101. Through such operations, carbon dioxide is removed from the exhaust gas at least partially, and the exhaust gas with reduced carbon dioxide concentration flows out of the top of the absorption tower 101 and is emitted into the atmosphere through the exhaust line 122. The exhaust line 122 may be connected to other equipment, such as a stack, and the exhaust gas with reduced carbon dioxide concentration may be emitted through the stack.

The rich absorption solution in the absorption tower 101 is extracted from the bottom of the absorption tower 101 by the rich absorption solution pump 113 and flows through the rich absorption solution line 110. The rich absorption solution flowing through the rich absorption solution line 110 is heated by heat exchange in the heat exchanger 112 with the lean absorption solution flowing through the lean absorption solution line 111 and then flows into the regeneration tower 102. The rich absorption solution entering the regeneration tower 102 falls in the regeneration tower 102. While falling in the regeneration tower 102, the rich absorption solution comes into contact with saturated vapor, which is generated by the operation described below and rises in the regeneration tower 102, and is thus heated. As a result, at least part of carbon dioxide is stripped from the rich absorption solution, and the rich absorption solution becomes lean absorption solution and is collected at the bottom of the regeneration tower 102. The lean absorption solution in the regeneration tower 102 is extracted from the bottom of the regeneration tower 102 and flows through the circulation line 115 back into the regeneration tower 102. While flowing through the circulation line 115, the lean absorption solution exchanges heat with the mixed steam in the reboiler 103, and thus the lean absorption solution is heated. This raises the temperature of the lean absorption solution in the regeneration tower 102 so that carbon dioxide is released from the lean absorption solution and water evaporates, causing saturated vapor containing mainly carbon dioxide and steam to rise in the regeneration tower 102. The lean absorption solution may be circulated through the circulation line 115 by a pump (not shown) disposed in the circulation line 115, or by the density difference of the absorption solution without a pump.

The lean absorption solution in the regeneration tower 102 is also extracted from the bottom of the regeneration tower 102 by the lean absorption solution pump 114 and flows through the lean absorption solution line 111. The lean absorption solution flowing through the lean absorption solution line 111 is cooled by heat exchange in the heat exchanger 112 with the rich absorption solution flowing through the rich absorption solution line 110. The lean absorption solution cooled in the heat exchanger 112 flows into the absorption tower 101 and falls in the absorption tower 101 as described above.

The gas containing carbon dioxide released from the rich absorption solution and the lean absorption solution in the regeneration tower 102 is discharged from the top of the regeneration tower 102 and flows through the outflow line 120. The gas flowing through the outflow line 120 is boosted by the booster 121 and supplied to a facility that consumes carbon dioxide or a facility that stores carbon dioxide (both not shown).

Thus, in Embodiment 2, as in Embodiment 1, not only the exhaust steam, which is steam that has driven the high-pressure turbine 40a, but also the second steam supplied from the heat recovery device 30 can be used as a heat source for the reboiler 103 of the carbon dioxide recovery device 60b, thus providing a sufficient amount of heat to the reboiler 103.

In the carbon dioxide recovery device 60b, the amount of heat required by the reboiler 103 varies with the amount of carbon dioxide recovered. In this regard, in Embodiment 2, as in Embodiment 1, the amount of heat supplied to the reboiler 103 can be controlled by changing the opening degree of the pressure regulating valve 50a. A specific control method is the same as the control method described in Embodiment 1. This allows the amount of heat supplied to the carbon dioxide recovery device 60b to be controlled on the basis of heat demand in the carbon dioxide recovery device 60b.

In Embodiment 2, the carbon dioxide recovery device 60b recovers carbon dioxide from the exhaust gas discharged from the gas turbine 20. Therefore, even if the exhaust gas discharged from the steel manufacturing facility 2 is used as the fuel of the gas turbine 20, carbon dioxide produced in the steel manufacturing facility 2 and the gas turbine 20 can be recovered. In addition to the fact that the exhaust gas discharged from the steel manufacturing facility 2 contains carbon dioxide produced by reduction of iron ore using coal, carbon dioxide is produced when carbon monoxide or the like contained in the exhaust gas discharged from the steel manufacturing facility 2 is burned in the combustor 22 of the gas turbine 20. Therefore, the exhaust gas discharged from the gas turbine 20 that uses the exhaust gas discharged from the steel manufacturing facility 2 as fuel contains a higher concentration of carbon dioxide than the exhaust gas discharged from a typical gas turbine that uses natural gas or other fuels. Therefore, recovering carbon dioxide from the exhaust gas discharged from the gas turbine 20 that uses the exhaust gas from the steel manufacturing facility 2 as fuel requires a larger amount of heat than recovering carbon dioxide from the exhaust gas discharged from a typical gas turbine. In this regard, with the invention of the present disclosure, the amount of heat supplied to the carbon dioxide recovery device 60b can be increased, and carbon dioxide in the exhaust gas can be sufficiently recovered even in the gas turbine 20 that uses the exhaust gas from the steel manufacturing facility 2 as fuel.

<Modification of heat utilization system according to Embodiment 2 of present disclosure>

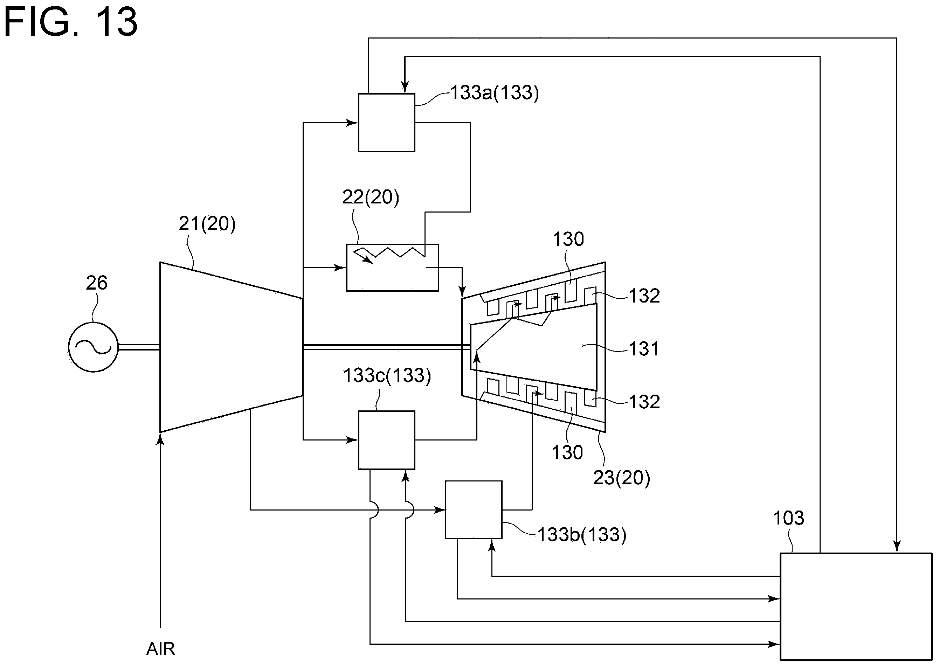

In Embodiment 2, heat used to heat the lean absorption solution in the reboiler 103 is heat recovered from the exhaust gas of the gas turbine 20 in the heat recovery device 30, but it is not limited to this heat. As shown in FIG. 13, in the gas turbine 20, usually, cooling air that has cooled part of the compressed air is used to cool the inside of the combustor 22, stator vanes 130 of the turbine 23, a turbine rotor 131, rotor blades 132 of the turbine rotor 131, and the like. For this purpose, the gas turbine 20 is equipped with an air cooler 133 to cool the compressed air. The air cooler 133 is a heat exchanger that exchanges heat between the compressed air and water supplied from the reboiler 103. This heat exchange cools the compressed air and heats the water. The air cooler 133 may include, for example, a cooler 133a for preparing cooling air to cool the inside of the combustor 22, a cooler 133b for preparing cooling air to cool the stator vanes 130 of the turbine 23, and a cooler 133c for preparing cooling air to cool the turbine rotor 131 and the rotor blades 132 of the turbine rotor 131. The water (or steam) heated in the air cooler 133 may be supplied to the reboiler 103, or it may be mixed with water that exchanges heat with the exhaust gas in the heat recovery device 30 (see FIG. 12) and heated before being supplied to the reboiler 103.

As described above, in Embodiment 2, as in Embodiment 1, the steam turbine 40 may include an intermediate-pressure turbine 40b (see FIG. 1) and a low-pressure turbine 40c (see FIG. 1) in addition to the high-pressure turbine 40a, but the steam turbine 40 may be composed of the high-pressure turbine 40a and the intermediate-pressure turbine 40b. In all of these configurations, the intermediate-pressure turbine 40b corresponds to the first steam turbine, as in Embodiment 1.

In Embodiment 2, the exhaust gas discharged from the steel manufacturing facility 2 is used as the fuel to be burned in the combustor 22 of the gas turbine 20, but it is not limited to this embodiment. Any fuel generation facility that generates a gas containing combustible components (carbon monoxide or hydrocarbons, etc.) and carbon dioxide as exhaust gas or a product can be provided as a source of the fuel supplied to the combustor 22 of the gas turbine 20. The steel manufacturing facility 2 in Embodiment 2 is an example of the fuel generation facility. Other examples of the fuel generating facility include a gasifier for gasifying coal or biomass fuels to obtain a gas containing hydrogen and carbon monoxide, and a reforming reaction device for heating hydrocarbons with steam to obtain a gas containing hydrogen and carbon monoxide.

### (Embodiment 3)

Next, the heat utilization system according to Embodiment 3 will be described. The heat utilization system according to Embodiment 3 differs from Embodiment 1 in that the heat demand facility 60 is changed to a vaporization facility used in chemical plants or the like. In Embodiment 3, the same constituent elements as those in Embodiment 1 are associated with the same reference signs and not described again in detail.

### <Configuration of heat utilization system according to Embodiment 3 of present disclosure>

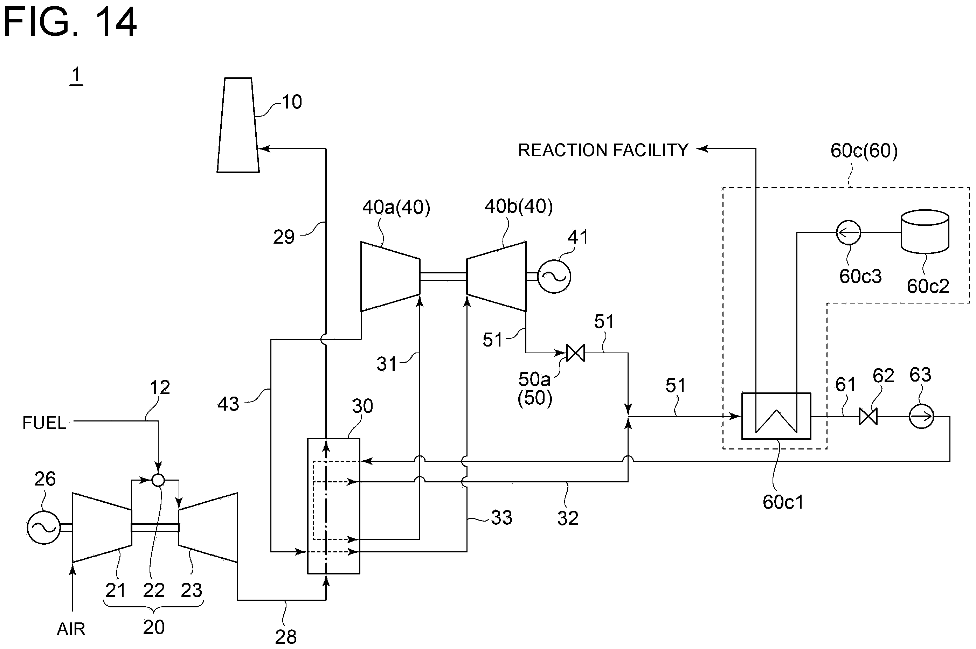

As shown in FIG. 14, in the heat utilization system 1 according to Embodiment 3 of the present disclosure, the heat demand facility 60 is a vaporization facility 60c for vaporizing a liquid substance (e.g., ammonia or methanol) which is a raw material used in chemical plants or the like. The vaporization facility 60c includes a heat exchange mechanism 60c1 that exchanges heat between the liquid substance to be heated and the first and second steam. The vaporization facility 60c may include a tank 60c2 for storing the liquid substance, and a pump 60c3 for supplying the liquid substance in the tank 60c2 to the heat exchange mechanism 60c1.

Although the other configurations may be the same as those of Embodiment 1 to constitute Embodiment 3, the configurations of Embodiment 1 may be changed as described below to constitute Embodiment 3. In the heat utilization system 1 according to Embodiment 3 of the present disclosure, the steam turbine 40 has only a high-pressure turbine 40a and an intermediate-pressure turbine 40b. The other configurations are the same as in Embodiment 1, except that, due to the absence of the low-pressure turbine 40c (see FIG. 1) and the condenser 71 (see FIG. 1), which are components of Embodiment 1, there are no surrounding configuration requirements and no heat demand facility inlet valve 52 (see FIG. 1) and no open/close valve (see FIG. 1), and that the discharge line 61 communicates with the vaporization facility 60c and the heat recovery device 30. In Embodiment 3, as in Embodiment 1, the intermediate-pressure turbine 40b corresponds to the first steam turbine, but unlike Embodiment 1, there is no second steam turbine.

### <Operation of heat utilization system according to Embodiment 3 of present disclosure (Heat utilization method)>

Next, the operation of the heat utilization system 1 according to Embodiment 3 of the present disclosure will be described. Apart from the operation where heat of the first and second steam is utilized in the vaporization facility 60c, the operations of Embodiments 1 and 3 are the same. Therefore, the following will explain only the differences between the operations of Embodiments 1 and 3.

The mixed steam of the exhaust steam (first steam) discharged from the intermediate-pressure turbine 40b and the second steam from the heat recovery device 30 is supplied to the vaporization facility 60c. The mixed steam supplied to the vaporization facility 60c flows into the heat exchange mechanism 60c1 and exchanges heat with the liquid substance supplied from the tank 60c2 by the pump 60c3. Through the heat exchange in the heat exchange mechanism 60c1, the liquid substance is heated and vaporized and supplied to a reaction facility (not shown). On the other hand, the mixed steam is cooled. During this heat exchange, the pressure of the mixed fluid in the heat exchange mechanism 60c1 can be adjusted by the pressure regulating valve 62. This allows the pressure in the heat exchange mechanism 60c1 to be kept high enough to provide the required amount of heat by obtaining sufficient steam density and sufficient heat transfer coefficient, and also allows the steam to condense at the temperature required in the heat exchange mechanism 60c1. The water condensed from the mixed steam is circulated by the pump 63 through the discharge line 61 and supplied to the heat recovery device 30.

Thus, in Embodiment 3, as in Embodiment 1, not only the exhaust steam, which is steam that has driven the intermediate-pressure turbine 40b, but also the second steam supplied from the heat recovery device 30 can be used as a heat source for the heat exchange mechanism 60c1 of the vaporization facility 60c, thus providing a sufficient amount of heat to the heat exchange mechanism 60c1.

In the vaporization facility 60c, the amount of heat required by the heat exchange mechanism 60c1 varies with the amount of liquid substance vaporized. In this regard, in Embodiment 3, as in Embodiment 1, the amount of heat supplied to the heat exchange mechanism 60c1 can be controlled by changing the opening degree of the pressure regulating valve 50a. A specific control method is the same as the control method described in Embodiment 1. This allows the amount of heat supplied to the vaporization facility 60c to be controlled on the basis of heat demand in the vaporization facility 60c.

The contents described in the above embodiments would be understood as follows, for instance.
[1] A heat utilization system according to one aspect includes: a heat recovery device (30) configured to generate first steam and second steam with a lower pressure than the first steam from water by heat exchange between a heating fluid and the water; a discharge source (gas turbine 20) which discharges the heating fluid; a first steam turbine (high-pressure turbine 40a or intermediate-pressure turbine 40b) driven by the first steam; a pressure reduction part (50) configured to reduce pressure of exhaust steam which is steam that has driven the first steam turbine (40a or 40b); a heat demand facility (60) which utilizes heat of at least one of at least part of the exhaust steam or the second steam; an exhaust steam line (51) connecting the first steam turbine (40a or 40b) and the heat demand facility (60); and a second steam line (32) through which the second steam flows out of the heat recovery device (30). The second steam line (32) is connected to the exhaust steam line (51) at a position downstream of the pressure reduction part (50).

With the heat utilization system of the present disclosure, not only the exhaust steam, which is steam that has driven the first steam turbine, but also the second steam supplied from the heat recovery device can be used as a heat source for the heat demand facility, thus providing a sufficient amount of heat to the heat demand facility.

[2] A heat utilization system according to another aspect is the heat utilization system of [1], in which the heat demand facility (60) includes a heat exchange mechanism (reboiler 103/heat exchange mechanism 60c1) configured to heat an object to be heated by heat exchange between at least one of the exhaust steam or the second steam and the object to be heated.

With this configuration, it is possible to heat the object in the heat demand facility.

[3] A heat utilization system according to still another aspect is the heat utilization system of [2], in which the heat demand facility (60) is a vaporization facility (60c) for vaporizing a liquid substance which is the object to be heated.

With this configuration, it is possible to vaporize the liquid substance in the heat demand facility.

[4] A heat utilization system according to still another aspect is the heat utilization system of any one of [1] to [3], further including a second steam turbine (low-pressure turbine 40c) driven by at least part of the exhaust steam.

With this configuration, if the heat demand in the heat demand facility is small, the exhaust steam that is not needed in the heat demand facility can be used to drive the second steam turbine, which increases the power generation in the heat utilization system.

[5] A heat utilization system according to still another aspect is the heat utilization system of any one of [1] to [4], in which the pressure reduction part (50) is configured to adjust a pressure reduction amount of the exhaust steam, on the basis of heat demand in the heat demand facility (60).

With this configuration, as the pressure reduction part reduces the pressure of the exhaust steam, the output of the first steam turbine decreases, and the temperature of the exhaust steam rises. Therefore, if the heat demand in the heat demand facility increases, by adjusting the pressure reduction amount of the exhaust steam by the pressure reduction part, the exhaust steam with higher temperature can be supplied to the heat demand facility, so that a sufficient amount of heat can be supplied to the heat demand facility on the basis of heat demand in the heat demand facility.

[6] A heat utilization system according to still another aspect is the heat utilization system of [4], including an exhaust steam supply amount adjustment part (heat demand facility inlet valve 52/low-pressure turbine inlet valve 55) for adjusting a supply amount of the exhaust steam supplied to the second steam turbine (40c). A supply amount of the exhaust steam to the heat demand facility (60) is adjusted by adjusting the supply amount of the exhaust steam to the second steam turbine (40c) by the exhaust steam supply amount adjustment part (52/55) on the basis of heat demand in the heat demand facility (60).

With this configuration, by decreasing the supply amount of the exhaust steam supplied to the second steam turbine and increasing the supply amount of the exhaust steam supplied to the heat demand facility, it is possible to supply a sufficient amount of heat to the heat demand facility on the basis of heat demand in the heat demand facility. Additionally, if the heat demand in the heat demand facility is small, by increasing the supply amount of the exhaust steam supplied to the second steam turbine, the exhaust steam that is not needed in the heat demand facility can be used to drive the second steam turbine, which increases the power generation in the heat utilization system.

[7] A heat utilization system according to still another aspect is the heat utilization system of [4], including an exhaust steam supply amount adjustment part (heat demand facility inlet valve 52/low-pressure turbine inlet valve 55) for adjusting a supply amount of the exhaust steam supplied to the second steam turbine (40c). Supply of the exhaust steam to the second steam turbine (40c) is stopped by the exhaust steam supply amount adjustment part (52/55) while a pressure reduction amount of the exhaust steam is adjusted by the pressure reduction part (50), on the basis of heat demand in the heat demand facility (60).

With this configuration, when the required amount of heat corresponding to heat demand in the heat demand facility cannot be supplied to the heat demand facility despite not supplying the exhaust steam to the second steam turbine, by adjusting the pressure reduction amount of the exhaust steam due to the pressure reduction part, the exhaust steam with higher temperature can be supplied to the heat demand facility, so that a sufficient amount of heat can be supplied to the heat demand facility on the basis of heat demand in the heat demand facility.

[8] A heat utilization system according to still another aspect is the heat utilization system of [2], in which the heat demand facility (60) is a carbon dioxide recovery device (60b) for recovering carbon dioxide contained in the heating fluid. The carbon dioxide recovery device (60b) includes: an absorption tower (101) configured to absorb carbon dioxide into an absorption solution by bringing the absorption solution into contact with the heating fluid after the heat exchange between the heating fluid and the water in the heat recovery device (30); and a regeneration tower (102) configured to release carbon dioxide from the absorption solution by heating the absorption solution that has absorbed carbon dioxide in the absorption tower

(101). The heat exchange mechanism is a reboiler (103) for heating the absorption solution in the regeneration tower (102) as the object to be heated.

With this configuration, by heating the absorption solution in the regeneration tower to release carbon dioxide from the absorption tower in the carbon dioxide recovery device, it is possible to recover carbon dioxide contained in the heating fluid.

[9] A heat utilization system according to still another aspect is the heat utilization system of [8], in which the discharge source is a gas turbine (20). The gas turbine (20) includes: a compressor (21) for compressing air; a combustor (22) for burning fuel using compressed air compressed by the compressor (21); a turbine (23) driven by combustion gas generated by burning the fuel in the combustor; and an air cooler (133) for cooling part of the compressed air by heat exchange between part of the compressed air and part of the water.

With this configuration, heat removed from the compressed air to regulate the temperature of the cooling air for cooling the combustor and the turbine of the gas turbine is used to heat the absorption solution, which increases the amount of heat available in the carbon dioxide recovery device.

[10] A heat utilization system according to still another aspect is the heat utilization system of [8], in which the discharge source is a gas turbine (20). The gas turbine (20) includes: a compressor (21) for compressing air; a combustor (22) for burning fuel using compressed air compressed by the compressor (21); and a turbine (23) driven by combustion gas generated by burning the fuel in the combustor. The heat utilization system (1) includes a fuel generation facility (steel manufacturing facility 2) configured to generate a gas containing combustible components and carbon dioxide as exhaust gas or a product. The fuel generation facility (2) is configured to supply the gas as the fuel to the combustor (22).

With this configuration, the carbon dioxide recovery device recovers carbon dioxide from the gas discharged from the gas turbine. Therefore, even if the gas supplied from the fuel generation facility is used as the fuel of the gas turbine, carbon dioxide produced in the fuel generation facility and the gas turbine can be recovered.

[11] A heat utilization system according to one aspect includes: a heat recovery device (30) configured to generate first steam from water by heat exchange between a heating fluid and the water; a discharge source (gas turbine 20) which discharges the heating fluid; a first steam turbine (high-pressure turbine 40a or intermediate-pressure turbine 40b) driven by the first steam; a pressure reduction part (50) configured to reduce pressure of exhaust steam which is steam that has driven the first steam turbine (40a or 40b); and a heat demand facility (60) which utilizes heat of at least part of the exhaust steam downstream of the pressure reduction part (50). The pressure reduction part (50) is configured to adjust a pressure reduction amount of the exhaust steam, on the basis of heat demand in the heat demand facility (60).

With the heat utilization system of the present disclosure, by increasing the pressure reduction amount of the exhaust steam, the pressure at the inlet of the pressure reduction part, i.e., at the outlet of the first steam turbine, increases, and the pressure expansion ratio of the first steam turbine decreases, so that the output of the first steam turbine deceases. This increases the temperature of the exhaust steam and thus increases the amount of heat supplied to the heat demand facility, allowing a sufficient amount of heat to be supplied to the heat demand facility.

[12] A heat utilization system according to another aspect is the heat utilization system of [11], in which the pressure reduction amount by the pressure reduction part (50) is increased with an increase in heat demand in the heat demand facility (60).

With this configuration, if the heat demand in the heat demand facility increases, by increasing the pressure reduction amount of the exhaust steam by the pressure reduction part, the temperature of the exhaust steam is increased, and the amount of heat supplied to the heat demand facility is increased, allowing a sufficient amount of heat to be supplied to the heat demand facility.

[13] A heat utilization system according to still another aspect is the heat utilization system of [11] or [12], in which a flow path area for the exhaust steam in the pressure reduction part (50) is decreased with an increase in heat demand in the heat demand facility (60).

With this configuration, if the heat demand in the heat demand facility increases, by decreasing the flow path area for the exhaust steam in the pressure reduction part, the pressure reduction amount of the exhaust steam is increased, the temperature of the exhaust steam is increased, and the amount of heat supplied to the heat demand facility is increased, allowing a sufficient amount of heat to be supplied to the heat demand facility.

[14] A heat utilization system according to still another aspect is the heat utilization system of any one of [11] to [13], including: a second steam turbine (low-pressure turbine 40c) driven by at least part of the exhaust steam; and an exhaust steam supply amount adjustment part (heat demand facility inlet valve 52/low-pressure turbine inlet valve 55) for adjusting a supply amount of the exhaust steam supplied to the second steam turbine (40c). A supply amount of the exhaust steam to the heat demand facility (60) is adjusted by adjusting the supply amount of the exhaust steam to the second steam turbine (40c) by the exhaust steam supply amount adjustment part (52/55) on the basis of heat demand in the heat demand facility (60).

With this configuration, by decreasing the supply amount of the exhaust steam supplied to the second steam turbine and increasing the supply amount of the exhaust steam supplied to the heat demand facility, it is possible to supply a sufficient amount of heat to the heat demand facility on the basis of heat demand in the heat demand facility. Additionally, if the heat demand in the heat demand facility is small, by increasing the supply amount of the exhaust steam supplied to the second steam turbine, the exhaust steam that is not needed in the heat demand facility can be used to drive the second steam turbine, which increases the power generation in the heat utilization system.

[15] A heat utilization system according to still another aspect is the heat utilization system of [14], in which the supply amount of the exhaust steam to the heat demand facility (60) is adjusted while minimizing the pressure reduction amount in the pressure reduction part (50).

With this configuration, it is possible to meet the heat demand in the heat demand facility without decreasing the output of the first steam turbine.

[16] A heat utilization system according to still another aspect is the heat utilization system of [14], in which supply of the exhaust steam to the second steam turbine (40c) is stopped by the exhaust steam supply amount adjustment part (52, 55) while the pressure reduction amount of the exhaust steam is adjusted by the pressure reduction part (50), on the basis of heat demand in the heat demand facility (60).

With this configuration, when the heat demand in the heat demand facility cannot be met even if the entire amount of exhaust steam is supplied to the heat demand facility, by increasing the pressure reduction amount of the exhaust steam due to the pressure reduction part, the temperature of the exhaust steam is increased, and the amount of heat supplied to the heat demand facility is increased, meeting the heat demand in the heat demand facility.

[17] A heat utilization system according to still another aspect is the heat utilization system of [16], in which the pressure reduction amount by the pressure reduction part (50) is increased with an increase in heat demand in the heat demand facility (60).

With this configuration, if the heat demand in the heat demand facility increases in the state where the entire amount of exhaust steam is supplied to the heat demand facility, by increasing the pressure reduction amount of the exhaust steam due to the pressure reduction part, the temperature of the exhaust steam is increased, and the amount of heat supplied to the heat demand facility is increased, meeting the heat demand in the heat demand facility.

[18] A heat utilization system according to still another aspect is the heat utilization system of [14], in which supply of the exhaust steam to the second steam turbine (40c) is stopped by the exhaust steam supply amount adjustment part (52, 55) while a flow path area for the exhaust steam in the pressure reduction part (50) is adjusted, on the basis of heat demand in the heat demand facility (60).

With this configuration, when the heat demand in the heat demand facility cannot be met even if the entire amount of exhaust steam is supplied to the heat demand facility, by decreasing the flow path area for the exhaust steam in the pressure reduction part to increase the pressure reduction amount of the exhaust steam, the temperature of the exhaust steam is increased, and the amount of heat supplied to the heat demand facility is increased, meeting the heat demand in the heat demand facility.

[19] A heat utilization system according to still another aspect is the heat utilization system of [18], in which the flow path area for the exhaust steam in the pressure reduction part is decreased with an increase in heat demand in the heat demand facility.

With this configuration, if the heat demand in the heat demand facility increases in the state where the entire amount of exhaust steam is supplied to the heat demand facility, by decreasing the flow path area for the exhaust steam in the pressure reduction part to increase the pressure reduction amount of the exhaust steam, the temperature of the exhaust steam is increased, and the amount of heat supplied to the heat demand facility is increased, meeting the heat demand in the heat demand facility.

[20] A heat utilization system according to still another aspect is the heat utilization system of [11], including a heat supply amount control device (501). The heat supply amount control device (501) includes: a receiving part (511) configured to receive, from the heat demand facility, a heat demand signal which is a signal related to heat demand in the heat demand facility (60); a control signal generation part (512) configured to generate a control signal which is a signal for controlling the pressure reduction amount by the pressure reduction part (50), using the heat demand signal; and a control signal transmission part (513) configured to transmit the control signal to the pressure reduction part (50).

With this configuration, the heat supply amount control device adjusts the pressure reduction amount due to the pressure reduction part on the basis of heat demand in the heat demand facility, so that the amount of heat required to meet the heat demand can be supplied to the heat demand facility appropriately.

[21] A heat utilization system according to still another aspect is the heat utilization system of [20], in which the control signal generation part (512) is configured to generate the control signal to increase the pressure reduction amount by the pressure reduction part (50) when an increase in heat demand in the heat demand facility (60) is detected on the basis of the heat demand signal.

With this configuration, if the heat demand in the heat demand facility increases, by increasing the pressure reduction amount of the exhaust steam by the pressure reduction part, the temperature of the exhaust steam is increased, and the amount of heat supplied to the heat demand facility is increased, allowing a sufficient amount of heat to be supplied to the heat demand facility.

[22] A heat utilization system according to still another aspect is the heat utilization system of [20] or [21], in which the control signal generation part (512) is configured to generate the control signal to decrease the flow path area for the exhaust steam in the pressure reduction part (50) when an increase in heat demand in the heat demand facility (60) is detected on the basis of the heat demand signal.

With this configuration, if the heat demand in the heat demand facility increases, by decreasing the flow path area for the exhaust steam in the pressure reduction part, the pressure reduction amount of the exhaust steam is increased, the temperature of the exhaust steam is increased, and the amount of heat supplied to the heat demand facility is increased, allowing a sufficient amount of heat to be supplied to the heat demand facility.

[23] A heat utilization system according to still another aspect is the heat utilization system of any one of [20] to [22], including: a second steam turbine (40c) driven by at least part of the exhaust steam; and an exhaust steam supply amount adjustment part (52/55) for adjusting a supply amount of the exhaust steam supplied to the second steam turbine (40c). The heat supply amount control device (501) includes: an adjustment signal generation part (522) configured to generate an adjustment signal for adjusting the supply amount of the exhaust steam supplied to the second steam turbine (40c); and an adjustment signal transmission part (523) configured to transmit the adjustment signal to the exhaust steam supply amount adjustment part (52/55). The exhaust steam supply amount adjustment part (52/55) is configured to adjust the supply amount of the exhaust steam to the second steam turbine (40c), on the basis of the adjustment signal.

With this configuration, by decreasing the supply amount of the exhaust steam supplied to the second steam turbine and increasing the supply amount of the exhaust steam supplied to the heat demand facility, it is possible to supply a sufficient amount of heat to the heat demand facility on the basis of heat demand in the heat demand facility. Additionally, if the heat demand in the heat demand facility is small, by increasing the supply amount of the exhaust steam supplied to the second steam turbine, the exhaust steam that is not needed in the heat demand facility can be used to drive the second steam turbine, which increases the power generation in the heat utilization system.

[24] A heat utilization system according to still another aspect is the heat utilization system of [23], in which the control signal generation part (522) is configured to generate the control signal to minimize the pressure reduction amount by the pressure reduction part (50).

With this configuration, it is possible to meet the heat demand in the heat demand facility without decreasing the output of the first steam turbine.

[25] A heat utilization system according to still another aspect is the heat utilization system of [23], in which the adjustment signal generation part (522) is configured to generate the adjustment signal to stop supplying the exhaust steam to the second steam turbine (40c).

With this configuration, if the priority of supplying heat to the heat demand facility is higher than the power generation in the heat utilization system, the second steam turbine is stopped, and the entire amount of exhaust steam is supplied to the heat demand facility to meet the heat demand in the heat demand facility with higher priority.

[26] A heat utilization system according to still another aspect is the heat utilization system of [25], in which the control signal generation part (522) is configured to generate the control signal to increase the pressure reduction amount by the pressure reduction part (50) when an increase in heat demand in the heat demand facility (60) is detected on the basis of the heat demand signal.

With this configuration, when the heat demand in the heat demand facility cannot be met even if the entire amount of exhaust steam is supplied to the heat demand facility, by increasing the pressure reduction amount of the exhaust steam due to the pressure reduction part, the temperature of the exhaust steam is increased, and the amount of heat supplied to the heat demand facility is increased, meeting the heat demand in the heat demand facility.

[27] A heat utilization system according to still another aspect is the heat utilization system of [25], in which the control signal generation part (522) is configured to generate the control signal to decrease the flow path area for the exhaust steam in the pressure reduction part (50) when an increase in heat demand in the heat demand facility (60) is detected on the basis of the heat demand signal.

With this configuration, when the heat demand in the heat demand facility cannot be met even if the entire amount of exhaust steam is supplied to the heat demand facility, by decreasing the flow path area for the exhaust steam in the pressure reduction part to increase the pressure reduction amount of the exhaust steam, the temperature of the exhaust steam is increased, and the amount of heat supplied to the heat demand facility is increased, meeting the heat demand in the heat demand facility.

[28] A heat utilization method according to one aspect includes: a step of discharging a heating fluid from a discharge source (gas turbine 20); a step of generating first steam from water by heat exchange between the heating fluid and the water; a step of driving a first steam turbine (high-pressure turbine 40a or intermediate-pressure turbine 40b) by the first steam; a step of reducing pressure of exhaust steam which is steam that has driven the first steam turbine (40a or 40b); and a step of supplying the exhaust steam with reduced pressure to a heat demand facility (60). The step of reducing the pressure of the exhaust steam includes adjusting a pressure reduction amount of the exhaust steam, on the basis of heat demand in the heat demand facility (60).

With the heat utilization method of the present disclosure, by increasing the pressure reduction amount of the exhaust steam, the pressure at the inlet of the pressure reduction part, i.e., at the outlet of the first steam turbine, increases, and the pressure expansion ratio of the first steam turbine decreases, so that the output of the first steam turbine deceases. This increases the temperature of the exhaust steam and thus increases the amount of heat supplied to the heat demand facility, allowing a sufficient amount of heat to be supplied to the heat demand facility.

[29] A heat utilization method according to another aspect is the heat utilization method of [28], in which the step of reducing the pressure of the exhaust steam includes increasing the pressure reduction amount with an increase in heat demand in the heat demand facility (60).

With this method, if the heat demand in the heat demand facility increases, by increasing the pressure reduction amount of the exhaust steam, the temperature of the exhaust steam is increased, and the amount of heat supplied to the heat demand facility is increased, allowing a sufficient amount of heat to be supplied to the heat demand facility.

[30] A heat utilization method according to still another aspect is the heat utilization method of [28] or [29], in which the step of reducing the pressure of the exhaust steam includes reducing the pressure of the exhaust steam using a pressure reduction part (50), and the step of reducing the pressure of the exhaust steam includes decreasing a flow path area for the exhaust steam in the pressure reduction part (50) with an increase in heat demand in the heat demand facility (60).

With this method, if the heat demand in the heat demand facility increases, by decreasing the flow path area for the exhaust steam in the pressure reduction part, the pressure reduction amount of the exhaust steam is increased, the temperature of the exhaust steam is increased, and the amount of heat supplied to the heat demand facility is increased, allowing a sufficient amount of heat to be supplied to the heat demand facility.

[31] A heat utilization method according to still another aspect is the heat utilization method of any one of [28] to [30], including: a step of supplying part of the exhaust steam to a second steam turbine (40c) driven by the exhaust steam; and a step of adjusting a supply amount of the exhaust steam to the second steam turbine (40c) according to heat demand in the heat demand facility (60).

With this method, by decreasing the supply amount of the exhaust steam supplied to the second steam turbine and increasing the supply amount of the exhaust steam supplied to the heat demand facility, it is possible to supply a sufficient amount of heat to the heat demand facility on the basis of heat demand in the heat demand facility. Additionally, if the heat demand in the heat demand facility is small, by increasing the supply amount of the exhaust steam supplied to the second steam turbine, the exhaust steam that is not needed in the heat demand facility can be used to drive the second steam turbine, which increases the power generation in the heat utilization system.

### Reference Signs List

- 1: Heat utilization system
- 2: Steel manufacturing facility (Fuel generation facility)
- 20: Gas turbine (Discharge source)
- 21: Compressor
- 22: Combustor
- 23: Turbine
- 30: Heat recovery device
- 32: Second steam line
- 40a: High-pressure turbine (First steam turbine)
- 40b: Intermediate-pressure turbine (First steam turbine)
- 40c: Low-pressure turbine (Second steam turbine)
- 50: Pressure reduction part
- 51: Exhaust steam line
- 52: Heat demand facility inlet valve (Exhaust steam supply amount adjustment part)
- 55: Low-pressure turbine inlet valve (Exhaust steam supply amount adjustment part)
- 60: Heat demand facility
- 60b: Carbon dioxide recovery device
- 60c: Vaporization facility
- 60c1: Heat exchange mechanism
- 101: Absorption tower
- 102: Regeneration tower
- 103: Reboiler (Heat exchange mechanism)
- 133: Air cooler
- 501: Heat supply amount control device
- 511: Receiving part
- 512: Control signal generation part
- 513: Control signal transmission part
- 522: Adjustment signal generation part
- 523: Adjustment signal transmission part

## Claims

1. A heat utilization system, comprising:
a heat recovery device configured to generate first steam and second steam with a lower pressure than the first steam from water by heat exchange between a heating fluid and the water;
a discharge source which discharges the heating fluid;
a first steam turbine driven by the first steam;
a pressure reduction part configured to reduce pressure of exhaust steam which is steam that has driven the first steam turbine;
a heat demand facility which utilizes heat of at least one of at least part of the exhaust steam or the second steam;
an exhaust steam line connecting the first steam turbine and the heat demand facility; and
a second steam line through which the second steam flows out of the heat recovery device,
wherein the second steam line is connected to the exhaust steam line at a position downstream of the pressure reduction part.

2. The heat utilization system according to claim 1,
wherein the heat demand facility includes a heat exchange mechanism configured to heat an object to be heated by heat exchange between at least one of the exhaust steam or the second steam and the object to be heated.

3. The heat utilization system according to claim 2,
wherein the heat demand facility is a vaporization facility for vaporizing a liquid substance which is the object to be heated.

4. The heat utilization system according to claim 1 or 2, comprising a second steam turbine driven by at least part of the exhaust steam.

5. The heat utilization system according to claim 1 or 2,
wherein the pressure reduction part is configured to adjust a pressure reduction amount of the exhaust steam, on the basis of heat demand in the heat demand facility.

6. The heat utilization system according to claim 4, comprising an exhaust steam supply amount adjustment part for adjusting a supply amount of the exhaust steam supplied to the second steam turbine,
wherein a supply amount of the exhaust steam to the heat demand facility is adjusted by adjusting the supply amount of the exhaust steam to the second steam turbine by the exhaust steam supply amount adjustment part on the basis of heat demand in the heat demand facility.

7. The heat utilization system according to claim 4, comprising an exhaust steam supply amount adjustment part for adjusting a supply amount of the exhaust steam supplied to the second steam turbine,
wherein supply of the exhaust steam to the second steam turbine is stopped by the exhaust steam supply amount adjustment part while a pressure reduction amount of the exhaust steam is adjusted by the pressure reduction part, on the basis of heat demand in the heat demand facility.

8. The heat utilization system according to claim 2,
wherein the heat demand facility is a carbon dioxide recovery device for recovering carbon dioxide contained in the heating fluid,
wherein the carbon dioxide recovery device includes:
an absorption tower configured to absorb carbon dioxide into an absorption solution by bringing the absorption solution into contact with the heating fluid after the heat exchange between the heating fluid and the water in the heat recovery device; and
a regeneration tower configured to release carbon dioxide from the absorption solution by heating the absorption solution that has absorbed carbon dioxide in the absorption tower, and
wherein the heat exchange mechanism is a reboiler for heating the absorption solution in the regeneration tower as the object to be heated.

9. The heat utilization system according to claim 8,
wherein the discharge source is a gas turbine,
wherein the gas turbine includes:
a compressor for compressing air;
a combustor for burning fuel using compressed air compressed by the compressor;
a turbine driven by combustion gas generated by burning the fuel in the combustor; and
an air cooler for cooling part of the compressed air by heat exchange between part of the compressed air and part of the water.

10. The heat utilization system according to claim 8,
wherein the discharge source is a gas turbine,
wherein the gas turbine includes:
a compressor for compressing air;
a combustor for burning fuel using compressed air compressed by the compressor; and
a turbine driven by combustion gas generated by burning the fuel in the combustor;
wherein the heat utilization system comprises a fuel generation facility configured to generate a gas containing combustible components and carbon dioxide as exhaust gas or a product, and
wherein the fuel generation facility is configured to supply the gas as the fuel to the combustor.

11. A heat utilization system, comprising:
a heat recovery device configured to generate first steam from water by heat exchange between a heating fluid and the water;
a discharge source which discharges the heating fluid;
a first steam turbine driven by the first steam;
a pressure reduction part configured to reduce pressure of exhaust steam which is steam that has driven the first steam turbine; and
a heat demand facility which utilizes heat of at least part of the exhaust steam downstream of the pressure reduction part,
wherein the pressure reduction part is configured to adjust a pressure reduction amount of the exhaust steam, on the basis of heat demand in the heat demand facility.

12. The heat utilization system according to claim 11,
wherein the pressure reduction amount by the pressure reduction part is increased with an increase in heat demand in the heat demand facility.

13. The heat utilization system according to claim 11,
wherein a flow path area for the exhaust steam in the pressure reduction part is decreased with an increase in heat demand in the heat demand facility.

14. The heat utilization system according to any one of claims 11 to 13, comprising:
a second steam turbine driven by at least part of the exhaust steam; and
an exhaust steam supply amount adjustment part for adjusting a supply amount of the exhaust steam supplied to the second steam turbine,
wherein a supply amount of the exhaust steam to the heat demand facility is adjusted by adjusting the supply amount of the exhaust steam to the second steam turbine by the exhaust steam supply amount adjustment part on the basis of heat demand in the heat demand facility.

15. The heat utilization system according to claim 14,
wherein the supply amount of the exhaust steam to the heat demand facility is adjusted while minimizing the pressure reduction amount in the pressure reduction part.

16. The heat utilization system according to claim 14,
wherein supply of the exhaust steam to the second steam turbine is stopped by the exhaust steam supply amount adjustment part while the pressure reduction amount of the exhaust steam is adjusted by the pressure reduction part, on the basis of heat demand in the heat demand facility.

17. The heat utilization system according to claim 16,
wherein the pressure reduction amount by the pressure reduction part is increased with an increase in heat demand in the heat demand facility.

18. The heat utilization system according to claim 14,
wherein supply of the exhaust steam to the second steam turbine is stopped by the exhaust steam supply amount adjustment part while a flow path area for the exhaust steam in the pressure reduction part is adjusted, on the basis of heat demand in the heat demand facility.

19. The heat utilization system according to claim 18,
wherein the flow path area for the exhaust steam in the pressure reduction part is decreased with an increase in heat demand in the heat demand facility.

20. The heat utilization system according to claim 11, comprising a heat supply amount control device,
wherein the heat supply amount control device includes:
a receiving part configured to receive, from the heat demand facility, a heat demand signal which is a signal related to heat demand in the heat demand facility;
a control signal generation part configured to generate a control signal which is a signal for controlling the pressure reduction amount by the pressure reduction part, using the heat demand signal; and
a control signal transmission part configured to transmit the control signal to the pressure reduction part.

21. The heat utilization system according to claim 20,
wherein the control signal generation part is configured to generate the control signal to increase the pressure reduction amount by the pressure reduction part when an increase in heat demand in the heat demand facility is detected on the basis of the heat demand signal.

22. The heat utilization system according to claim 20,
wherein the control signal generation part is configured to generate the control signal to decrease the flow path area for the exhaust steam in the pressure reduction part when an increase in heat demand in the heat demand facility is detected on the basis of the heat demand signal.

23. The heat utilization system according to any one of claims 20 to 22, comprising:
a second steam turbine driven by at least part of the exhaust steam; and
an exhaust steam supply amount adjustment part for adjusting a supply amount of the exhaust steam supplied to the second steam turbine,
wherein the heat supply amount control device includes:
an adjustment signal generation part configured to generate an adjustment signal for adjusting the supply amount of the exhaust steam supplied to the second steam turbine; and
an adjustment signal transmission part configured to transmit the adjustment signal to the exhaust steam supply amount adjustment part, and
wherein the exhaust steam supply amount adjustment part is configured to adjust the supply amount of the exhaust steam to the second steam turbine, on the basis of the adjustment signal.

24. The heat utilization system according to claim 23,
wherein the control signal generation part is configured to generate the control signal to minimize the pressure reduction amount by the pressure reduction part.

25. The heat utilization system according to claim 23,
wherein the adjustment signal generation part is configured to generate the adjustment signal to stop supplying the exhaust steam to the second steam turbine.

26. The heat utilization system according to claim 25,
wherein the control signal generation part is configured to generate the control signal to increase the pressure reduction amount by the pressure reduction part when an increase in heat demand in the heat demand facility is detected on the basis of the heat demand signal.

27. The heat utilization system according to claim 25,
wherein the control signal generation part is configured to generate the control signal to decrease the flow path area for the exhaust steam in the pressure reduction part when an increase in heat demand in the heat demand facility is detected on the basis of the heat demand signal.

28. A heat utilization method, comprising:
a step of discharging a heating fluid from a discharge source;
a step of generating first steam from water by heat exchange between the heating fluid and the water;
a step of driving a first steam turbine by the first steam;
a step of reducing pressure of exhaust steam which is steam that has driven the first steam turbine; and
a step of supplying the exhaust steam with reduced pressure to a heat demand facility,
wherein the step of reducing the pressure of the exhaust steam includes adjusting a pressure reduction amount of the exhaust steam, on the basis of heat demand in the heat demand facility.

29. The heat utilization method according to claim 28,
wherein the step of reducing the pressure of the exhaust steam includes increasing the pressure reduction amount with an increase in heat demand in the heat demand facility.

30. The heat utilization method according to claim 28,
wherein the step of reducing the pressure of the exhaust steam includes reducing the pressure of the exhaust steam using a pressure reduction part, and
wherein the step of reducing the pressure of the exhaust steam includes decreasing a flow path area for the exhaust steam in the pressure reduction part with an increase in heat demand in the heat demand facility.

31. The heat utilization method according to any one of claims 28 to 30, comprising:
a step of supplying part of the exhaust steam to a second steam turbine driven by the exhaust steam; and
a step of adjusting a supply amount of the exhaust steam to the second steam turbine according to heat demand in the heat demand facility.
